# EUROPEAN PATENT APPLICATION

(11) **EP 4 593 508 A1**
(43) Date of publication of application: **30.07.2025**
(21) Application number: 23862253.4
(22) Date of filing: 31.08.2023
(51) Int. Cl.: H04W 74/08

(54) **METHOD AND DEVICE USED IN COMMUNICATION NODE FOR WIRELESS COMMUNICATION**

(30) Priority: 05.09.2022 CN 202211080336
(71) Applicant: SHANGHAI LANGBO COMMUNICATION TECHNOLOGY COMPANY LIMITED, Shanghai 200240 (CN)
(72) Inventor: YU, Qiaoling, Shanghai 201206 (CN); ZHANG, Xiaobo, Shanghai 201206 (CN)
(74) Representative: Gunzelmann, Rainer
(86) International application number: PCT/CN2023/115993
(87) International publication number: WO 2024/051559

(57) **Abstract**

Disclosed in the present application is a method and an apparatus used in a wireless communication node. The communication node sends at least one preamble according to whether PRACH repetition is performed; in response to the at least one preamble being sent, receives a first MAC subPDU in a first time window, wherein the first MAC subPDU indicates a first backoff parameter value; determines a first backoff time according to the product of at least the first backoff parameter value and a first backoff factor; at least either the first backoff parameter value or the first backoff factor depends on whether PRACH repetition is performed. The present application provides an enhanced method for calculating the backoff time for the random access backoff mechanism for enhanced uplink coverage of PRACH, and the solution is capable of adjusting the load state of the cell and increase the probability of random access success of the UE.

## Description

### Technical Field

The present application relates to a transmission method and an apparatus in wireless communication systems, in particular, to a transmission method and an apparatus for coverage enhancement.

### Background Art

Coverage is one of the key factors that operators consider when commercializing cellular communication networks because it directly affects service quality, capital expenditure (CAPEX) and operating expenses (OPEX). In most of the scenarios actually deployed, uplink (UL) performance may be a bottleneck, while in some emerging vertical use cases, such as video uploading, uplink traffic is large. In the Rel-17 "NR (New Radio) coverage enhancement" work item (WI), the NR coverage for PUSCH (Physical uplink shared channel), PUCCH (Physical uplink control channel) and Msg3 (Message 3) is extended and enhanced. However, PRACH (Physical random access channel) coverage still has not been increased. Because PRACH transmission is very important in many processes, such as initial access and beam failure recovery, Rel-18 established a "Further NR coverage enhancements" work item to further enhance the uplink coverage of PRACH.

### Summary of the Invention

In the existing protocol, a random access (RA) backoff mechanism based on backoff time is used to solve the cell overload issue. If a user equipment (UE) receives one backoff indicator (BI) during a random access process and PREAMBLE _BACKOFF is set as the product of one backoff parameter value determined by table lookup, and one backoff factor (SCALING_FACTOR_BI) configured by RRC message; if the random access process is not completed, according to one backoff time determined according to PREAMBLE_BACKOFF, the random access resource selection process is only performed after this backoff time. Performing PRACH repetition during random access is an effective means to enhance the uplink coverage of PRACH. Since PRACH repetition leads to an increase in the time-frequency resources occupied by one PRACH attempt, when a large number of user equipment initiate random access, the overload condition of the cell changes compared to a traditional network, which makes it difficult for the existing random access backoff mechanism based on backoff time to solve the cell load balancing issue of PRACH repetition. Therefore, the random access backoff mechanism needs to be enhanced to address the cell load balancing issue of PRACH repetition.

In response to the issues described above, the present application provides a solution for random access. In the description of the issue described above, using an NR system as an example; the present application is similarly applicable to scenarios such as LTE systems; further, although the present application is originally intended for a Uu air interface, the present application may also be used for a PC5 interface. Further, although the present application is originally intended for terminal and base station scenarios, the present application is similarly applicable to V2X (Vehicle-to-Everything) scenarios, communication scenarios between terminal and relay, and between relay and base station to achieve similar technical effects in terminal and base station scenarios. Further, although the present application is originally intended for terminal and base station scenarios, the present application is similarly applicable to IAB (Integrated Access and Backhaul) communication scenarios, so as to achieve similar technical effects in terminal and base station scenarios. Further, although the present application is originally intended for terrestrial network (TN) scenarios, the present application is similarly applicable to non-terrestrial network (NTN) communication scenarios, so as to achieve similar technical effects in TN scenarios. In addition, the use of unified solutions across different scenarios is also helpful to reducing hardware complexity and costs.

As one embodiment, the terminology in the present application is interpreted with reference to the definitions in the 3GPP TS36 series-specification protocol.

As one embodiment, the terminology in the present application is interpreted with reference to the definitions in the 3GPP TS38 series-specification protocol.

As one embodiment, the terminology in the present application is interpreted with reference to the definitions in the 3GPP TS37 series-specification protocol.

As one embodiment, the terminology in the present application is interpreted with reference to the definitions in the IEEE (Institute of Electrical and Electronics Engineers) specification protocol.

It should be noted that, embodiments of any of the nodes of the present application and the features in the embodiments may be applied to any other node without conflict. The embodiments of the present application and the features in the embodiments may be arbitrarily combined with one another without conflict.

Disclosed in the present application is a method used in a first node for wireless communication, characterized in that, the method comprises:
sending at least one preamble according to whether PRACH repetition is performed;
in response to the at least one preamble being sent, receiving a first MAC (Medium Access Control) subPDU (Protocol Data Unit) in a first time window, wherein the first MAC subPDU indicates a first backoff parameter value; determining a first backoff time according to the product of at least the first backoff parameter value and a first backoff factor;
wherein only the former of the first backoff parameter value and the first backoff factor depends on whether PRACH repetition is performed.

Disclosed in the present application is a method used in a first node for wireless communication, characterized in that, the method comprises:
sending at least one preamble according to whether PRACH repetition is performed;
in response to the at least one preamble being sent, receiving a first MAC (Medium Access Control) subPDU (Protocol Data Unit) in a first time window, wherein the first MAC subPDU indicates a first backoff parameter value; determining a first backoff time according to the product of at least the first backoff parameter value and a first backoff factor;
wherein only the latter of the first backoff parameter value and the first backoff factor depends on whether PRACH repetition is performed.

Disclosed in the present application is a method used in a first node for wireless communication, characterized in that, the method comprises:
sending at least one preamble according to whether PRACH repetition is performed;
in response to the at least one preamble being sent, receiving a first MAC (Medium Access Control) subPDU (Protocol Data Unit) in a first time window, wherein the first MAC subPDU indicates a first backoff parameter value; determining a first backoff time according to the product of at least the first backoff parameter value and a first backoff factor;
wherein both the first backoff parameter value and the first backoff factor depend on whether PRACH repetition is performed.

Disclosed in the present application is a method used in a first node for wireless communication, characterized in that, the method comprises:
sending at least one preamble according to whether PRACH repetition is performed;
in response to the at least one preamble being sent, receiving a first MAC (Medium Access Control) subPDU (Protocol Data Unit) in a first time window, wherein the first MAC subPDU indicates a first backoff parameter value; determining a first backoff time according to the product of at least the first backoff parameter value and a first backoff factor;
wherein the first backoff time depends on whether PRACH repetition is performed.

As one embodiment, an issue to be addressed by the present application includes: how to solve the cell overload issue of PRACH repetition.

As one embodiment, an issue to be addressed by the present application includes: how to calculate the backoff time for PRACH repetition.

As one embodiment, an issue to be addressed by the present application includes: how to determine a first backoff time.

As one embodiment, an issue to be addressed by the present application includes: how to determine a first backoff parameter value.

As one embodiment, an issue to be addressed by the present application includes: how to determine a first backoff factor.

As one embodiment, an advantage of the method described above includes: the calculation method of the backoff time for PRACH repetition being different from the calculation method of the backoff time for non-PRACH repetition.

As one embodiment, a characteristic of the method described above includes: a first backoff time is determined according to the product of at least the first backoff parameter value and a first backoff factor, and at least either the first backoff parameter value or the first backoff factor depends on whether PRACH repetition is performed.

As one embodiment, a characteristic of the method described above includes: the first backoff parameter value depends on whether PRACH repetition is performed.

As one embodiment, a characteristic of the method described above includes: the first backoff factor depends on whether PRACH repetition is performed.

As one embodiment, a characteristic of the method described above includes: both the first backoff parameter value and the first backoff factor depend on whether PRACH repetition is performed.

As one embodiment, a characteristic of the method described above includes: the first backoff time depends on whether PRACH repetition is performed.

As one embodiment, an advantage of the method described above includes: solving the cell overload issue of PRACH repetition.

As one embodiment, an advantage of the method described above includes: avoiding cell overload.

As one embodiment, an advantage of the method described above includes: adjusting the load state of the cell.

According to one aspect of the present application, characterized in that, the method comprises:
receiving a first signaling set, wherein the first signaling set indicates at least a first candidate backoff factor;
wherein the first backoff factor is one candidate backoff factor in a first candidate backoff factor set, and the first candidate backoff factor set comprises at least a first candidate backoff factor and a second candidate backoff factor; the first backoff factor depends on whether PRACH repetition is performed.

According to one aspect of the present application, characterized in that, the first backoff parameter value is one candidate backoff parameter value in a first candidate backoff parameter value set, and the first candidate backoff parameter value set comprises at least a first candidate backoff parameter value and a second candidate backoff parameter value; the first backoff parameter value depends on whether PRACH repetition is performed.

According to one aspect of the present application, characterized in that, the first candidate backoff parameter value depends on a first backoff table, and the second candidate backoff parameter value depends on a second backoff table; the first backoff table comprises M1 indexes, M2 indexes in the M1 indexes indicate M2 candidate backoff parameter values; the second backoff table comprises N1 indexes, and N2 indexes in the N1 indexes indicate N2 candidate backoff parameter values; the first backoff table differs from the second backoff table.

According to one aspect of the present application, characterized in that, both the first candidate backoff parameter value and the second candidate backoff parameter value depend on a first backoff table, wherein the first backoff table comprises Q1 indexes; Q2 indexes in the Q1 indexes indicate Q2 candidate backoff parameter values; Q3 indexes in the Q1 indexes indicate Q3 candidate backoff parameter values; the first candidate backoff parameter value is one candidate backoff parameter value in the Q2 candidate backoff parameter values, and the second candidate backoff parameter value is one candidate backoff parameter value in the Q3 candidate backoff parameter values; the first candidate backoff parameter value and the second candidate backoff parameter value are associated with the same index.

According to one aspect of the present application, characterized in that, the phrase "determining a first backoff time according to the product of at least the first backoff parameter value and a first backoff factor" comprises: setting a first backoff variable as the product of the first backoff parameter value and the first backoff factor; determining the first backoff time according to at least the first backoff variable.

According to one aspect of the present application, characterized in that, the phrase "determining the first backoff time according to at least the first backoff variable" comprises: determining the first backoff time according to the first backoff variable and a first parameter; the first parameter being related to the number of PRACH repetitions; PRACH repetition being performed.

Disclosed in the present application is a method used in a second node for wireless communication, characterized in that, the method comprises:
receiving at least one preamble;
in response to the at least one preamble being received, sending a first MAC subPDU, wherein the first MAC subPDU indicates a first backoff parameter value;
wherein the at least one preamble is sent according to whether PRACH repetition is performed; the first MAC subPDU is received in a first time window; the product of at least the first backoff parameter value and a first backoff factor is used to determine a first backoff time; at least either the first backoff parameter value or the first backoff factor depends on whether PRACH repetition is performed.

According to one aspect of the present application, characterized in that, the method comprises:
sending a first signaling set, wherein the first signaling set indicates at least a first candidate backoff factor;
wherein the first backoff factor is one candidate backoff factor in a first candidate backoff factor set, and the first candidate backoff factor set comprises at least a first candidate backoff factor and a second candidate backoff factor; the first backoff factor depends on whether PRACH repetition is performed.

According to one aspect of the present application, characterized in that, the first backoff parameter value is one candidate backoff parameter value in a first candidate backoff parameter value set, and the first candidate backoff parameter value set comprises at least a first candidate backoff parameter value and a second candidate backoff parameter value; the first backoff parameter value depends on whether PRACH repetition is performed.

According to one aspect of the present application, characterized in that, the first candidate backoff parameter value depends on a first backoff table, and the second candidate backoff parameter value depends on a second backoff table; the first backoff table comprises M1 indexes, M2 indexes in the M1 indexes indicate M2 candidate backoff parameter values; the second backoff table comprises N1 indexes, and N2 indexes in the N1 indexes indicate N2 candidate backoff parameter values; the first backoff table differs from the second backoff table.

According to one aspect of the present application, characterized in that, both the first candidate backoff parameter value and the second candidate backoff parameter value depend on a first backoff table, wherein the first backoff table comprises Q1 indexes; Q2 indexes in the Q1 indexes indicate Q2 candidate backoff parameter values; Q3 indexes in the Q1 indexes indicate Q3 candidate backoff parameter values; the first candidate backoff parameter value is one candidate backoff parameter value in the Q2 candidate backoff parameter values, and the second candidate backoff parameter value is one candidate backoff parameter value in the Q3 candidate backoff parameter values; the first candidate backoff parameter value and the second candidate backoff parameter value are associated with the same index.

According to one aspect of the present application, characterized in that, the phrase "the product of at least the first backoff parameter value and a first backoff factor is used to determine a first backoff time" comprises: setting a first backoff variable as the product of the first backoff parameter value and the first backoff factor; at least the first backoff variable being used to determine the first backoff time.

According to one aspect of the present application, characterized in that, the phrase "at least the first backoff variable is used to determine the first backoff time" comprises: the first backoff variable and a first parameter being used to determine the first backoff time; the first parameter being related to the number of PRACH repetitions; PRACH repetition being performed.

Disclosed in the present application is a first node for wireless communication, characterized in that, the node comprises:
a first transmitter, sending at least one preamble according to whether PRACH repetition is performed;
a first receiver, in response to the at least one preamble being sent, receiving a first MAC subPDU in a first time window, wherein the first MAC subPDU indicates a first backoff parameter value; determining a first backoff time according to the product of at least the first backoff parameter value and a first backoff factor;
wherein at least either the first backoff parameter value or the first backoff factor depends on whether PRACH repetition is performed.

Disclosed in the present application is a second node for wireless communication, characterized in that, the node comprises:
a second receiver, receiving at least one preamble;
a second transmitter, in response to the at least one preamble being received, sending a first MAC subPDU, wherein the first MAC subPDU indicates a first backoff parameter value;
wherein the at least one preamble is sent according to whether PRACH repetition is performed; the first MAC subPDU is received in a first time window; the product of at least the first backoff parameter value and a first backoff factor is used to determine a first backoff time; at least either the first backoff parameter value or the first backoff factor depends on whether PRACH repetition is performed.

As one embodiment, the present application designed a random access backoff time suitable for PRACH repetition that has the following advantages over a conventional scheme:
- . avoids cell overload;
- . adjusts the load state of the cell;
- . solves the cell overload issue of PRACH repetition;
- . increases the probability of random access success for UE.

### Description of Accompanying Drawings

Other features, objectives, and advantages of the present application will become more apparent by reading the detailed description of the non-limiting embodiments with reference to the following accompanying drawings:
FIG. 1 shows a flow chart of the transmission of at least one preamble and a first MAC subPDU according to one embodiment of the present application;
FIG. 2 shows a schematic diagram of a network architecture according to one embodiment of the present application;
FIG. 3 shows a schematic diagram of an embodiment of a wireless protocol architecture for a user plane and a control plane, according to one embodiment of the present application;
FIG. 4 shows a schematic diagram of a first communication equipment and a second communication equipment according to one embodiment of the present application;
FIG. 5 shows a flow chart of wireless signal transmission according to one embodiment of the present application;
FIG. 6 shows a flow chart of wireless signal transmission according to another embodiment of the present application;
FIG. 7 shows a flow chart of wireless signal transmission according to yet another embodiment of the present application;
FIG. 8 shows a schematic diagram of a first backoff parameter value being one candidate backoff parameter value in a first candidate backoff parameter value set according to one embodiment of the present application;
FIG. 9 shows a schematic diagram of a first candidate backoff parameter value depending on a first backoff table and a second candidate backoff parameter value depending on a second backoff table, according to one embodiment of the present application;
FIG. 10 shows a schematic diagram of both a first candidate backoff parameter value and a second candidate backoff parameter value depending on a first backoff table, according to one embodiment of the present application;
FIG. 11 shows a schematic diagram of determining a first backoff time according to a first backoff variable and a first parameter according to one embodiment of the present application;
FIG. 12 shows a structural block diagram of a processing apparatus for use in a first node according to one embodiment of the present application;
FIG. 13 shows a structural block diagram of a processing apparatus for use in a second node according to one embodiment of the present application.

### Specific Embodiments

The technical solutions of the present application will be described in further detail below in conjunction with the accompanying drawings, and it is to be noted that the embodiments in the present application and the features in the embodiments may be arbitrarily combined with each other without conflict.

### Embodiment 1

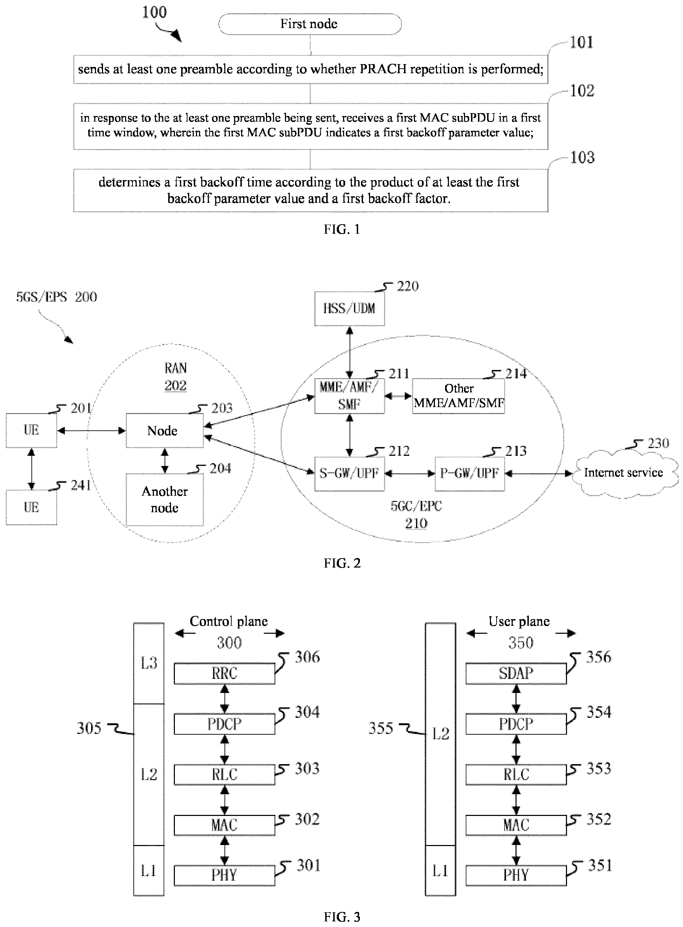

Embodiment 1 exemplifies a flow chart of the transmission of at least one preamble and a first MAC subPDU according to one embodiment of the present application, as shown in FIG. 1. In FIG. 1, each box represents one step, and it should be particularly emphasized that the sequence of the various boxes in the figure does not represent the temporal relation between the indicated steps.

In Embodiment 1, the first node in the present application, in Step 101, sends at least one preamble according to whether PRACH repetition is performed; in Step 102, in response to the at least one preamble being sent, receives a first MAC subPDU in a first time window, wherein the first MAC subPDU indicates a first backoff parameter value; in Step 103, determines a first backoff time according to the product of at least the first backoff parameter value and a first backoff factor; wherein at least either the first backoff parameter value or the first backoff factor depends on whether PRACH repetition is performed.

As one embodiment, during the initialization of the first random access process, whether PRACH repetition is performed is determined.

As one sub-embodiment of this embodiment, during the initialization of the first random access process, PRACH repetition is determined to be performed.

As one sub-embodiment of this embodiment, during the initialization of the first random access process, PRACH repetition is determined to not be performed.

As one embodiment, the at least one preamble is a first random access process.

As one embodiment, the first random access process is a 4-step random access (4-step RA) process.

As one embodiment, the first random access process is a contention based random access (CBRA) process.

As one embodiment, the first random access process is performed on the first cell.

As one embodiment, the first random access process is performed on a MAC entity for the cell group to which the first cell belongs.

As one embodiment, the first cell is a SpCell (Special Cell).

As one embodiment, the first cell is a PCell (Primary Cell).

As one embodiment, the first cell is a PSCell (Primary SCG (Secondary Cell Group)).

As one embodiment, the "sending at least one preamble according to whether PRACH repetition is performed" comprises: sending one or a plurality of preambles according to whether PRACH repetition is performed.

As one embodiment, the "sending at least one preamble according to whether PRACH repetition is performed" comprises: if PRACH repetition is performed, the at least one preamble comprising a plurality of preambles; if PRACH repetition is not performed, the at least one preamble comprising only one preamble.

As one embodiment, the "sending at least one preamble according to whether PRACH repetition is performed" comprises: if PRACH repetition is performed, sending K1 preambles, with the K1 being greater than 1; if PRACH repetition is not performed, sending only one preamble.

As one embodiment, the "sending at least one preamble according to whether PRACH repetition is performed" comprises: if PRACH repetition is not performed, sending only one preamble.

As one embodiment, the "sending at least one preamble according to whether PRACH repetition is performed" comprises: if PRACH repetition is performed, sending K1 preambles, with the K1 being greater than 1.

As one embodiment, the "sending at least one preamble according to whether PRACH repetition is performed" comprises: selecting a first random access resource group or a second random access resource group according to whether PRACH repetition is performed.

As one embodiment, the "sending at least one preamble according to whether PRACH repetition is performed" comprises: if PRACH repetition is performed, each preamble in the at least one preamble belonging to a first random access resource group; if PRACH repetition is not performed, the at least one preamble belonging to a second random access resource group.

As one sub-embodiment of this embodiment, the first random access resource group and the second random access resource group are different.

As one sub-embodiment of this embodiment, the first random access resource group does not indicate PRACH repetition, and the second random access resource group indicates PRACH repetition.

As one embodiment, the "sending at least one preamble according to whether PRACH repetition is performed" comprises: determining one time-frequency resource or K1 time-frequency resources according to whether PRACH repetition is performed, with the K1 being greater than 1.

As one embodiment, the "sending at least one preamble according to whether PRACH repetition is performed" comprises: if PRACH repetition is performed, at least one time-frequency resource in the K1 time-frequency resources sending a preamble, with the K1 being greater than 1; if PRACH repetition is not performed, sending one preamble on one time-frequency resource.

As one embodiment, the "sending at least one preamble according to whether PRACH repetition is performed" comprises: if PRACH repetition is not performed, sending one preamble on only one time-frequency resource.

As one embodiment, the "sending at least one preamble according to whether PRACH repetition is performed" comprises: if PRACH repetition is performed, sending the preamble on at least one time-frequency resource in the K1 time-frequency resources, with the K1 being greater than 1.

As one embodiment, the "sending the preamble in at least one time-frequency resource in the K1 time-frequency resources" comprises: sending the preamble on each time-frequency resource in the K1 time-frequency resources.

As one embodiment, the "sending the preamble in at least one time-frequency resource in the K1 time-frequency resources" comprises: sending the preamble on at least a first time-frequency resource in the K1 time-frequency resources.

As one embodiment, each time-frequency resource in the K1 time-frequency resources is used for the preamble.

As one embodiment, each time-frequency resource in the K1 time-frequency resources is used for one preamble.

As one embodiment, the preamble sent on the K1 time-frequency resources indicates PRACH repetition.

As one embodiment, the preamble sent on the K1 time-frequency resources is configured for PRACH repetition.

As one embodiment, the preamble sent on the K1 time-frequency resources is for one PRACH repetition.

As one embodiment, the preamble sent on the K1 time-frequency resources is one PRACH repetition.

As one embodiment, any two preambles sent on the K1 time-frequency resources are the same.

As one embodiment, any two preambles sent on the K1 time-frequency resources are different.

As one embodiment, there are two identical preambles in the preamble sent on the K1 time-frequency resources.

As one embodiment, there are two different preambles in the preamble sent on the K1 time-frequency resources.

As one embodiment, between any two time-frequency resources in the K1 time-frequency resources, PREAMBLE_POWER_RAMPING_COUNTER for the first random access process is not incremented.

As one embodiment, between any two time-frequency resources in the K1 time-frequency resources, PREAMBLE_TRANSMISSION_COUNTER for the first random access process is not incremented.

As one embodiment, in response to the at least one preamble being sent, a first random access response is received in the first time window, and the first random access response comprises at least the first MAC subPDU.

As one sub-embodiment of this embodiment, the first random access response is scheduled by one DCI (Downlink Control Information), and the one DCI is scrambled by one RA (Random Access)-RNTI (Radio Network Temporary Identifier).

As one sub-embodiment of this embodiment, the first random access response is one MAC PDU.

As one sub-embodiment of this embodiment, the first random access response comprises only the first MAC subPDU.

As one sub-embodiment of this embodiment, the first random access response comprises the first MAC subPDU and at least one MAC subPDU.

As one embodiment, the first MAC subPDU is a response to the at least one preamble.

As one embodiment, the first MAC subPDU is one MAC subPDU.

As one embodiment, the first MAC subPDU is one MAC subheader.

As one embodiment, the first MAC subPDU comprises only one MAC subheader.

As one embodiment, the first MAC subPDU does not comprise a RAPID (Random Access Preamble ID) field.

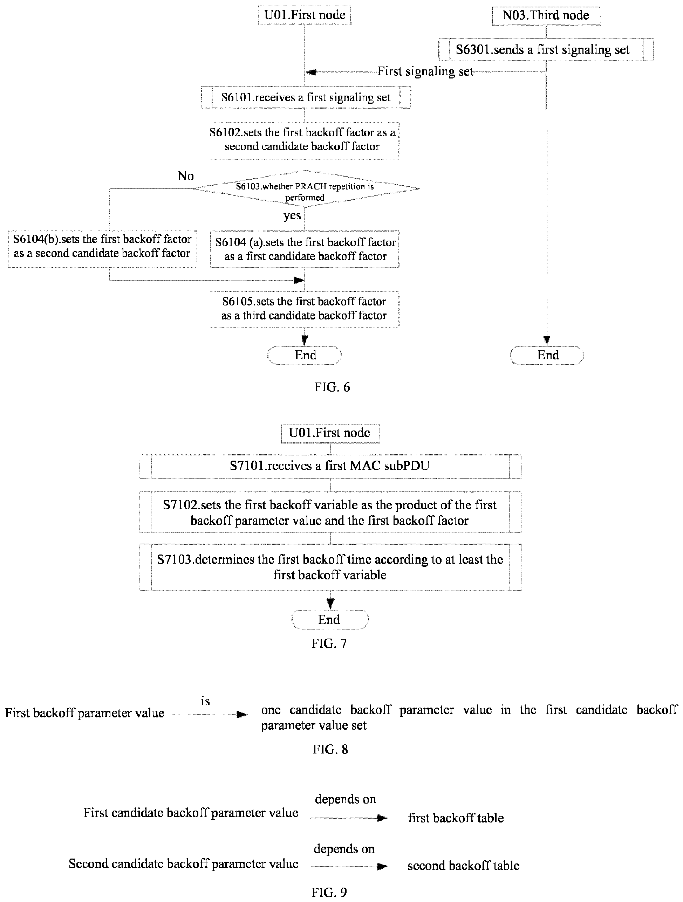

As one embodiment, if PRACH repetition is performed, the structure of the first MAC subPDU references Figure 6.1.5-1 in Section 6.1.5 of 3GPP TS38.321.

As one embodiment, if PRACH repetition is not performed, the structure of the first MAC subPDU references Figure 6.1.5-1 in Section 6.1.5 of 3GPP TS38.321.

As one embodiment, the first MAC subPDU is used to determine the first backoff parameter value.

As one embodiment, the first MAC subPDU comprises a first index, wherein the first index is used to determine the first backoff parameter value.

As one embodiment, the first MAC subPDU comprises one BI field.

As one embodiment, the BI field in the first MAC subPDU is used to indicate the overload condition in the first cell.

As one embodiment, the BI field in the first MAC subPDU indicates the first backoff parameter value.

As one embodiment, the BI field in the first MAC subPDU is set as a first index, and the first index is used to determine the first backoff parameter value.

As one embodiment, the BI field in the first MAC subPDU is used to determine the first backoff parameter value.

As one embodiment, if PRACH repetition is not performed, the BI field in the first MAC subPDU comprises 4 bits.

As one embodiment, if PRACH repetition is performed, the BI field in the first MAC subPDU comprises 5 bits.

As one embodiment, if PRACH repetition is performed, the BI field in the first MAC subPDU comprises 4 bits.

As one embodiment, if PRACH repetition is performed, the BI field in the first MAC subPDU comprises 3 bits.

As one embodiment, the first time window is running when the first MAC subPDU is received.

As one embodiment, the first MAC subPDU is received when the first time window is running.

As one embodiment, the first time window is one time window.

As one embodiment, the first time window is used to monitor a random access response.

As one embodiment, the first time window is a time window for monitoring a random access response.

As one embodiment, the first time window comprises a positive integer of slots.

As one embodiment, the first time window comprises a positive integer of subframes.

As one embodiment, the first time window comprises a positive integer of milliseconds.

As one embodiment, if PRACH repetition is not performed, the name of the first time window is ra-Response Window.

As one embodiment, if PRACH repetition is not performed, the sending cutoff instant of the at least one preamble is used to determine the starting instant of the first time window.

As one embodiment, if PRACH repetition is performed, the name of the first time window is ra-ResponseWindow.

As one embodiment, if PRACH repetition is performed, the name of the first time window comprises ra-ResponseWindow.

As one embodiment, if PRACH repetition is performed, the name of the first time window comprises at least one of ra-ResponseWindow, Msg1 (Message 1), PRACH and Repetition.

As one embodiment, if PRACH repetition is performed, the sending cutoff instant of the last one preamble in the at least one preamble is used to determine the starting instant of the first time window.

As one embodiment, if PRACH repetition is performed, the sending cutoff instant of a first preamble in the at least one preamble is used to determine the starting instant of the first time window.

As one embodiment, if PRACH repetition is performed, the sending cutoff instant of each preamble in the at least one preamble is used to determine the starting instant of the first time window.

As one embodiment, if PRACH repetition is performed, the first time window is dedicated to PRACH repetition.

As one embodiment, if PRACH repetition is performed, the first time window is not dedicated to PRACH repetition.

As one embodiment, if PRACH repetition is performed, the first time window cannot be restarted when it is running.

As one embodiment, if PRACH repetition is performed, the first time window may be restarted when it is running.

As one sub-embodiment of this embodiment, the first time window is restarted when it is running.

As one sub-embodiment of this embodiment, the first time window is not restarted when it is running.

As one embodiment, the first backoff parameter value is determined by table lookup according to the first MAC subPDU.

As one embodiment, the first index is an index of the first backoff parameter value.

As one embodiment, the unit of the first backoff parameter value is in milliseconds.

As one embodiment, the first backoff parameter value is determined by table lookup.

As one embodiment, the first backoff parameter value is predefined.

As one embodiment, the first backoff time is used to determine the earliest instant at which a random access resource selection process is next performed.

As one embodiment, the first backoff time is related to the instant at which a random access resource selection process is next performed.

As one embodiment, the first backoff time is not greater than the first backoff variable.

As one embodiment, the first backoff time comprises one time interval.

As one embodiment, the first backoff time is one random backoff time.

As one embodiment, the unit of the first backoff time is milliseconds.

As one embodiment, during the initialization of the first random access process, the first backoff factor is set.

As one embodiment, the first backoff factor is set before the first MAC subPDU is received.

As one embodiment, the first backoff factor is one variable.

As one embodiment, the first backoff factor is configured by RRC.

As one embodiment, the first backoff factor is predefined.

As one embodiment, the first backoff factor is configurable.

As one embodiment, the first backoff factor is SCALING_FACTOR_BI.

As one embodiment, the product of the first backoff parameter value and the first backoff factor is used to determine the maximum value of the first backoff time.

As one embodiment, the first backoff time is determined only according to the product of the first backoff parameter value and the first backoff factor.

As one embodiment, the first backoff time is related to the product of at least the first backoff parameter value and the first backoff factor.

As one embodiment, the first backoff time is related to the product of only the first backoff parameter value and the first backoff factor.

As one embodiment, if PRACH repetition is not performed, the first backoff time is determined according to the product of the first backoff parameter value and the first backoff factor.

As one embodiment, if PRACH repetition is performed, the first backoff time is determined according to the product of the first backoff parameter value and the first backoff factor.

As one embodiment, if PRACH repetition is performed, the first backoff time is determined according to the product of at least the first backoff parameter value and the first backoff factor.

As one embodiment, in response to the first random access process not being completed, the first backoff time is determined.

As one embodiment, the "the first random access process is not complete" comprises: not considering the first random access process to be completed.

As one embodiment, the "the first random access process is not complete" comprises: considering the first random access process to not be successfully completed.

As one embodiment, the "the first random access process is not complete" comprises: not considering the first random access process to be successfully completed.

As one embodiment, the expiration of at least the first time window is used to determine that the first random access process is not complete.

As one embodiment, it is considered that the random access response is received unsuccessfully; the "considered that the random access response is received unsuccessfully" is used to determine that the first random access process is not complete.

As one sub-embodiment of this embodiment, the expiration of at least the first time window is used to determine and consider that the random access response is received unsuccessfully.

As one sub-embodiment of this embodiment, if the first time window expires, it is considered that the random access response is received unsuccessfully.

As one sub-embodiment of this embodiment, if the first time window expires, and if the random access response comprising a random access preamble identifier matching PREAMBLE_INDEX is not received when the first time window is running, it is considered that the random access response is received unsuccessfully

As one sub-embodiment of this embodiment, if PRACH transmission is not performed, the PREAMBLE_INDEX is an index of at least one preamble.

As one sub-embodiment of this embodiment, if PRACH transmission is performed, the PREAMBLE_INDEX is an index of one preamble in the at least one preamble.

As one sub-embodiment of this embodiment, if PRACH transmission is performed, the PREAMBLE_INDEX is an index of any preamble in the at least one preamble.

As one embodiment, the expiration of at least a first timer is used to determine that the first random access process is not complete.

As one embodiment, at least unsuccessful contention resolution is used to determine that the first random access process is not complete.

As one embodiment, it is considered that contention resolution is unsuccessful; the "considered that contention resolution is unsuccessful" is used to determine that the first random access process is not complete.

As one sub-embodiment of this embodiment, a first RAR (Random Access Response) is received in the first time window, wherein the first RAR indicates a first TC-RNTI (Temporary C-RNTI); in response to the first RAR being received, a first Msg3 is sent; in response to the first Msg3 being sent, a first timer is started or restarted.

As one sub-embodiment of this embodiment, the first timer is ra-ContentionResolutionTimer.

As one sub-embodiment of this embodiment, if the first timer expires, it is considered that contention resolution is unsuccessful.

As one sub-embodiment of this embodiment, a second MAC PDU is received when the first timer is running, the second MAC PDU is scheduled by a first PDCCH (Physical Downlink Control Channel) transmission, and the first PDCCH transmission is addressed to a first TC-RNTI; if the second MAC PDU does not comprise a UE Content Resolution Identity MAC CE (Control Element), it is considered that contention resolution is unsuccessful; the first Msg3 comprises the first CCCH (Common Control Channel) SDU (Service data unit).

As one sub-embodiment of this embodiment, a second MAC PDU is received when the first timer is running, the second MAC PDU is scheduled by a first PDCCH transmission, the first PDCCH transmission is addressed to a first TC-RNTI, and the second MAC PDU comprises one UE Content Resolution Identity MAC CE; if a UE Content Resolution Identity in the one UE Content Resolution Identity MAC CE does not match a first CCCH SDU, it is considered that contention resolution is unsuccessful; the first Msg3 comprises the first CCCH SDU.

As one sub-embodiment of this embodiment, a UL grant in the first RAR is used to schedule the first Msg3.

As one sub-embodiment of this embodiment, one DCI scrambled by the first TC-RNTI is used to schedule the first Msg3.

As one sub-embodiment of this embodiment, in response to the first RAR being received, the first time window is stopped.

As one sub-embodiment of this embodiment, in response to the first RAR being received, the first time window is not stopped.

As one sub-embodiment of this embodiment, the first RAR is one MAC RAR.

As one sub-embodiment of this embodiment, the first RAR indicates a UL grant.

As one sub-embodiment of this embodiment, the first Msg3 is one Msg3.

As one sub-embodiment of this embodiment, the first Msg3 comprises a plurality of Msg3 repetitions.

As one sub-embodiment of this embodiment, a first symbol at the end of the first Msg3 transmission is used to determine the instant when the first timer is started or restarted.

As one sub-embodiment of this embodiment, the first Msg3 is one initial transmission of Msg3.

As one sub-embodiment of this embodiment, the first Msg3 is one re-transmission of Msg3.

As one sub-embodiment of this embodiment, the first Msg3 comprises a first C-RNTI MAC CE, the first C-RNTI MAC CE comprises a first C-RNTI, and the first C-RNTI is a C-RNTI of the first node in the first cell.

As one sub-embodiment of this embodiment, the first Msg3 comprises a first CCCH SDU, and the first CCCH SDU is one CCCH SDU.

As one sub-embodiment of this embodiment, the first Msg3 comprises only either of the first C-RNTI MAC CE or the first CCCH SDU.

As one sub-embodiment of this embodiment, the first CCCH SDU comprises a RRCResumeRequest message.

As one sub-embodiment of this embodiment, the first CCCH SDU comprises a RRCSetupRequest message.

As one sub-embodiment of this embodiment, the first CCCH SDU comprises a RRCReestablishmentRequest message.

As one embodiment, the first RAR is received.

As one embodiment, the first RAR is not received.

As one embodiment, both the first backoff parameter value and the first backoff factor depend on whether PRACH repetition is performed.

As one embodiment, the first backoff parameter value depends on whether PRACH repetition is performed, and the first backoff factor depends on whether PRACH repetition is performed.

As one embodiment, only either of the first backoff parameter value or the first backoff factor depends on whether PRACH repetition is performed.

As one embodiment, the first backoff factor does not depend on whether PRACH repetition is performed, and the first backoff parameter value depends on whether PRACH repetition is performed.

As one embodiment, the first backoff factor depends on whether PRACH repetition is performed, and the first backoff parameter value does not depend on whether PRACH repetition is performed.

As one embodiment, if the first backoff parameter value does not depend on whether PRACH repetition is performed, the first backoff parameter value is not related to whether PRACH repetition is performed.

As one embodiment, if the first backoff factor does not depend on whether PRACH repetition is performed, the first backoff factor is not related to whether PRACH repetition is performed.

As one embodiment, the "the first backoff parameter value depends on whether PRACH repetition is performed" comprises: the first backoff parameter value depending on at least whether PRACH repetition is performed.

As one embodiment, the "the first backoff parameter value depends on whether PRACH repetition is performed" comprises: the first backoff parameter value being related to whether PRACH repetition is performed.

As one embodiment, the "the first backoff parameter value depends on whether PRACH repetition is performed" comprises: whether PRACH repetition is performed being used to determine the first backoff parameter value.

As one embodiment, the "the first backoff parameter value depends on whether PRACH repetition is performed" comprises: if PRACH repetition is performed, the first backoff parameter value being for PRACH repetition; if PRACH repetition is not performed, the first backoff parameter value not being for PRACH repetition.

As one embodiment, the "the first backoff parameter value depends on whether PRACH repetition is performed" comprises: determining the first backoff parameter value according to whether PRACH repetition is performed.

As one embodiment, the "the first backoff factor depends on whether PRACH repetition is performed" comprises: the first backoff factor depending on whether PRACH repetition is performed.

As one embodiment, the "the first backoff factor depends on whether PRACH repetition is performed" comprises: the first backoff factor being related to whether PRACH repetition is performed.

As one embodiment, the "the first backoff factor depends on whether PRACH repetition is performed" comprises: whether PRACH repetition is performed being used to determine the first backoff factor.

As one embodiment, the "the first backoff factor depends on whether PRACH repetition is performed" comprises: setting the first backoff factor according to whether PRACH repetition is performed.

As one embodiment, the "the first backoff factor depends on whether PRACH repetition is performed" comprises: how to set the first backoff factor depending on whether PRACH repetition is performed.

As one embodiment, the "the first backoff factor depends on whether PRACH repetition is performed" comprises: determining whether the first backoff factor depends on whether PRACH repetition is performed.

As one embodiment, the "the first backoff factor depends on whether PRACH repetition is performed" comprises: if PRACH repetition is performed, the first backoff factor being for PRACH repetition; if PRACH repetition is not performed, the first backoff factor not being for PRACH repetition.

As one embodiment, if PRACH repetition is performed, the first backoff factor is the first candidate backoff factor; if PRACH repetition is not performed, the first backoff factor is the second candidate backoff factor; the first backoff factor depends on whether PRACH repetition is performed.

As one embodiment, the first candidate backoff parameter value depends on the first backoff table, and the second candidate backoff parameter value depends on the second backoff table.

As one embodiment, the first candidate backoff parameter value depends on the first backoff table, and the second candidate backoff parameter value depends on the first backoff table.

As one embodiment, the first candidate backoff parameter value depends on Table 7.2-1 in Section 7.2 in 3GPP TS 38.321, and the second candidate backoff parameter value depends on Table 7.2-1 in Section 7.2 in 3GPP TS 38.321.

As one embodiment, if PRACH repetition is performed, the first backoff parameter value is the first candidate backoff parameter value; if PRACH repetition is not performed, the first backoff parameter value is the second candidate backoff parameter value; the first backoff parameter value depends on whether PRACH repetition is performed.

As one embodiment, the first backoff factor is the second candidate backoff factor; the first backoff factor does not depend on whether PRACH repetition is performed.

As one embodiment, the first backoff factor is the third candidate backoff factor; the first backoff factor does not depend on whether PRACH repetition is performed.

As one embodiment, the first backoff parameter value is the second candidate backoff parameter value; the first backoff parameter value does not depend on whether PRACH repetition is performed.

As one embodiment, the "if PRACH repetition is performed" in the present application comprises: how to determine PRACH repetition is performed.

As one embodiment, the "if PRACH repetition is performed" in the present application comprises: if PRACH repetition is performed.

As one embodiment, the "if PRACH repetition is performed" in the present application comprises: if PRACH repetition is performed in the first random access process.

As one embodiment, the "if PRACH repetition is performed" in the present application comprises: if the at least one preamble is used for PRACH repetition.

As one embodiment, the "if PRACH repetition is performed" in the present application comprises: if the first random access resource group is selected.

As one embodiment, the "if PRACH repetition is performed" in the present application comprises: if the at least one preamble comprises a plurality of preambles.

As one embodiment, the "if PRACH repetition is performed" in the present application comprises: if the at least one preamble is sent on the K1 time-frequency resources.

As one embodiment, the PRACH repetition comprises: Msg1 (Message 1) repetition.

As one embodiment, the PRACH repetition comprises: RACH repetition.

As one embodiment, the PRACH repetition comprises: sending a plurality of PRACHs in one random access attempt.

As one embodiment, the PRACH repetition comprises: sending a plurality of PRACHs between two PREAMBLE_TRANSMISSION_COUNTER updates.

As one embodiment, the PRACH repetition comprises: sending a plurality of PRACHs between two PREAMBLE_POWER_RAMPING_COUNTER updates.

As one embodiment, the PRACH repetition comprises: a plurality of continuous PRACHs.

As one embodiment, during the first random access process, PRACH repetition is not determined to be performed; at least one preamble is sent; in response to the at least one preamble being sent, a first MAC subPDU is received in a first time window, and the first MAC subPDU indicates a first backoff parameter value; a first backoff time is determined according to the product of at least the first backoff parameter value and a first backoff factor; the first backoff factor is the second candidate backoff factor; the first backoff parameter value is the second candidate backoff parameter value.

As one embodiment, during the first random access process, PRACH repetition is determined to be performed; at least one preamble is sent; in response to the at least one preamble being sent, a first MAC subPDU is received in a first time window, and the first MAC subPDU indicates a first backoff parameter value; a first backoff time is determined according to the product of at least the first backoff parameter value and a first backoff factor.

As one sub-embodiment of this embodiment, the first backoff factor is the first candidate backoff factor; the first backoff parameter value is the first candidate backoff parameter value.

As one sub-embodiment of this embodiment, the first backoff factor is the second candidate backoff factor; the first backoff parameter value is the first candidate backoff parameter value.

As one sub-embodiment of this embodiment, the first backoff factor is the first candidate backoff factor; the first backoff parameter value is the second candidate backoff parameter value.

As one embodiment, the "the first backoff factor is the first candidate backoff factor" comprises: setting the first backoff factor as the first candidate backoff factor.

As one embodiment, the "the first backoff factor is the second candidate backoff factor" comprises: setting the first backoff factor as the second candidate backoff factor.

As one embodiment, the "the first backoff factor is the third candidate backoff factor" comprises: setting the first backoff factor as the third candidate backoff factor.

### Embodiment 2

Embodiment 2 exemplifies a schematic diagram of a network architecture according to one embodiment of the present application, as shown in FIG. 2. FIG. 2 illustrates a network architecture 200 of a 5G NR (New Radio)/LTE (Long-Term Evolution), LTE-A (Long-Term Evolution Advanced) system. The 5G NR/LTE/LTE-A network architecture 200 may be referred to as 5GS (5G System)/EPS (Evolved Packet System) 200 or some other suitable term. The 5GS/EPS 200 comprises at least one of a UE (User Equipment) 201, a RAN (Radio Access Network) 202, a 5GC (5G Core Network)/EPC (Evolved Packet Core) 210, a HSS (Home Subscriber Server)/UDM (Unified Data Management) 220 and an Internet service 230. The 5GS/EPS may be interconnected with other access networks, but these entities/interfaces are not shown for simplicity. As shown in the figure, the 5GS/EPS provides packet exchange services. However, it will be readily understood by those of ordinary skill in the art that various concepts presented throughout the present application may be extended to a network or other cellular networks that provide circuit exchange services. The RAN comprises a node 203 and another node 204. The node 203 provides user and control plane protocol termination towards the UE 201. The node 203 may be connected to the another node 204 via an Xn interface (e.g., backhaul)/X2 interface. The node 203 may also be referred to as a base station, a base transceiver station, a radio base station, a radio transceiver, a transceiver function, a basic service set (BSS), an extended service set (ESS), a TRP, or some other suitable term. The node 203 provides access points to the 5GC/EPC 210 for the UE 201. Examples of the UE 201 include cellular phones, smart phones, session initiation protocol (SIP) phones, laptop computers, personal digital assistants (PDA), satellite radios, non-terrestrial base station communications, satellite mobile communications, global positioning systems, multimedia devices, video devices, digital audio players (e.g., MP3 players), cameras, game consoles, unmanned aerial vehicles, aircraft, narrowband Internet of Things devices, machine-type communication devices, land vehicles, automobiles, wearable devices, or any other similar functional devices. Those of ordinary skill in the art may also refer to the UE 201 as a mobile station, a subscriber station, a mobile unit, a subscriber unit, a wireless unit, a remote unit, a mobile apparatus, a wireless apparatus, a wireless communication apparatus, a remote apparatus, a mobile subscriber station, an access terminal, a mobile terminal, a wireless terminal, a remote terminal, a handheld device, a user agent, a mobile client, a client, or some other suitable term. The node 203 is connected to the 5GC/EPC 210 via an S1/NG interface. The 5GC/EPC 210 includes an MME (Mobility Management Entity)/AMF (Authentication Management Field)/SMF (Session Management Function) 211, another MME/AMF/SMF214, an S-GW (Service Gateway)/UPF (User Plane Function) 212 and a P-GW (Packet Data Network Gateway)/UPF 213. The MME/AMF/SMF 211 is a control node that processes signaling between the UE 201 and the 5GC/EPC 210. In general, the MME/AMF/SMF 211 provides bearer and connection management. All user IP (Internet Protocol) packets are transmitted via the S-GW/UPF 212, which is itself connected to the P-GW/UPF 213. The P-GW provides UE IP address assignment along with other functions. The P-GW/UPF 213 is connected to the Internet service 230. The Internet service 230 comprises the operator's corresponding Internet protocol service, which may specifically comprise the Internet, an intranet, an IMS (IP Multimedia Subsystem), and a packet-switched streaming service.

As one embodiment, the UE 201 corresponds to the first node in the present application.

As one embodiment, the UE 201 is one user equipment (UE).

As one embodiment, the UE 201 is one base station equipment (BS).

As one embodiment, the UE 201 is one relay equipment.

As one embodiment, the node 203 corresponds to the second node in the present application.

As one embodiment, the node 203 is one base station equipment.

As one embodiment, the node 203 is one user equipment.

As one embodiment, the node 203 is one relay equipment.

As one embodiment, the node 203 is a gateway.

Typically, the UE 201 is one user equipment and the node 203 is one base station equipment.

As one embodiment, the user equipment supports transmission over a terrestrial network (TN).

As one embodiment, the user equipment supports transmission over a non-terrestrial network (NTN).

As one embodiment, the user equipment supports transmission over a network with large latency differences.

As one embodiment, the user equipment supports dual connection (DC) transmission.

As one embodiment, the user equipment includes an aircraft.

As one embodiment, the user equipment includes an in-vehicle terminal.

As one embodiment, the user equipment includes a vessel.

As one embodiment, the user equipment includes an Internet of Things terminal.

As one embodiment, the user equipment includes a terminal for an Industrial Internet of Things.

As one embodiment, the user equipment includes an equipment that supports low latency, high reliability transmission.

As one embodiment, the user equipment includes a test equipment.

As one embodiment, the user equipment includes a signaling tester.

As one embodiment, the base station equipment includes a base transceiver station (BTS).

As one embodiment, the base station equipment includes a node B (NB).

As one embodiment, the base station equipment includes a gNB.

As one embodiment, the base station equipment includes an eNB.

As one embodiment, the base station equipment includes an ng-eNB.

As one embodiment, the base station equipment includes an en-gNB.

As one embodiment, the base station equipment supports transmission over a non-terrestrial network.

As one embodiment, the base station equipment supports transmission over a network with large latency differences.

As one embodiment, the base station equipment supports transmission over a terrestrial network.

As one embodiment, the base station equipment includes a Macrocell base station.

As one embodiment, the base station equipment includes a Microcell base station.

As one embodiment, the base station equipment includes a Picocell base station.

As one embodiment, the base station equipment includes a Femtocell base station.

As one embodiment, the base station equipment includes a base station equipment that supports large latency differences.

As one embodiment, the base station equipment includes an aerial platform equipment.

As one embodiment, the base station equipment includes a satellite equipment.

As one embodiment, the base station equipment includes a TRP (Transmitter Receiver Point).

As one embodiment, the base station equipment includes a CU (Centralized Unit).

As one embodiment, the base station equipment includes a DU (Distributed Unit).

As one embodiment, the base station equipment includes a test equipment.

As one embodiment, the base station equipment includes a signaling tester.

As one embodiment, the base station equipment includes an IAB (Integrated Access and Backhaul)-node.

As one embodiment, the base station equipment includes an IAB-donor.

As one embodiment, the base station equipment includes an IAB-donor-CU.

As one embodiment, the base station equipment includes an IAB-donor-DU.

As one embodiment, the base station equipment includes an IAB-DU.

As one embodiment, the base station equipment includes an IAB-MT.

As one embodiment, the relay equipment includes a relay.

As one embodiment, the relay equipment includes a L3 relay.

As one embodiment, the relay equipment includes a L2 relay.

As one embodiment, the relay equipment includes a router.

As one embodiment, the relay equipment includes a switch.

As one embodiment, the relay equipment includes a user equipment.

As one embodiment, the relay equipment includes a base station equipment.

### Embodiment 3

Embodiment 3 shows a schematic diagram of an embodiment of a wireless protocol architecture for a user plane and a control plane, according to one embodiment of the present application, as shown in FIG. 3. FIG. 3 is a schematic diagram illustrating an embodiment of a radio protocol architecture for the user plane 350 and the control plane 300, and FIG. 3 uses three layers to show the radio protocol architecture used for the control plane 300: Layers 1, 2 and 3. Layer 1 (L1 layer) is the lowest layer and implements various PHY (physical layer) signal processing functions. L1 will be referred to herein as PHY 301. Layer 2 (L2) 305 comprises a MAC (Medium Access Control) sublayer 302, an RLC (Radio Link Control) sublayer 303, and a PDCP (Packet Data Convergence Protocol) sublayer 304 above PHY 301. The PDCP sublayer 304 provides multiplexing between different radio bearers and logical channels. The PDCP sublayer 304 also provides security by encrypting data packets and provides inter-zone movement support. The RLC sublayer 303 provides segmentation and reassembly of upper layer data packets, re-transmission of lost data packets, and re-ordering of data packets to compensate for out-of-sequence reception due to HARQ (Hybrid Automatic Repeat Request). The MAC sublayer 302 provides multiplexing between logical and transmission channels. The MAC sublayer 302 is also responsible for assigning various radio resources (e.g., resource blocks) in one cell. The MAC sublayer 302 is also responsible for HARQ operations. The RRC (Radio Resource Control) sublayer 306 in Layer 3 (L3) in the control plane 300 is responsible for obtaining radio resources (i.e., radio bearers) and configuring the lower layer using RRC signaling. The radio protocol architecture of the user plane 350 comprises Layer 1 (L1) and Layer 2 (L2), the radio protocol architecture of the user plane 350 is generally identical to the corresponding layer and sublayer in the control plane 300 in terms of a physical layer 351, a PDCP sublayer 354 in L2 355, a RLC sublayer 353 in L2 355, and a MAC sublayer 352 in L2 355, but the PDCP sublayer 354 also provides header compression for upper layer data packets to reduce radio transmission overhead. L2 355 in the user plane 350 also comprises an SDAP (Service Data Adaption Protocol) sublayer 356, and the SDAP sublayer 356 is responsible for mapping between a QoS stream and a data radio bearer (DRB) to support the diversity of the service.

As one embodiment, the wireless protocol architecture in FIG. 3 applies to the first node in the present application.

As one embodiment, the wireless protocol architecture in FIG. 3 applies to the second node in the present application.

As one embodiment, each preamble in the at least one preamble in the present application is generated in the PHY 301 or PHY 351.

As one embodiment, the first MAC subPDU in the present application is generated in the RRC 306.

As one embodiment, the first MAC subPDU in the present application is generated in the MAC 302 or MAC 352.

As one embodiment, each signaling in the first signaling set in the present application is generated in the RRC 306.

As one embodiment, at least one of the signaling in the first signaling set in the present application is generated in the RRC 306.

As one embodiment, at least one of the signaling in the first signaling set in the present application is generated in the MAC 302 or MAC 352.

As one embodiment, at least one of the signaling in the first signaling set in the present application is generated in the PHY 301 or PHY 351.

### Embodiment 4

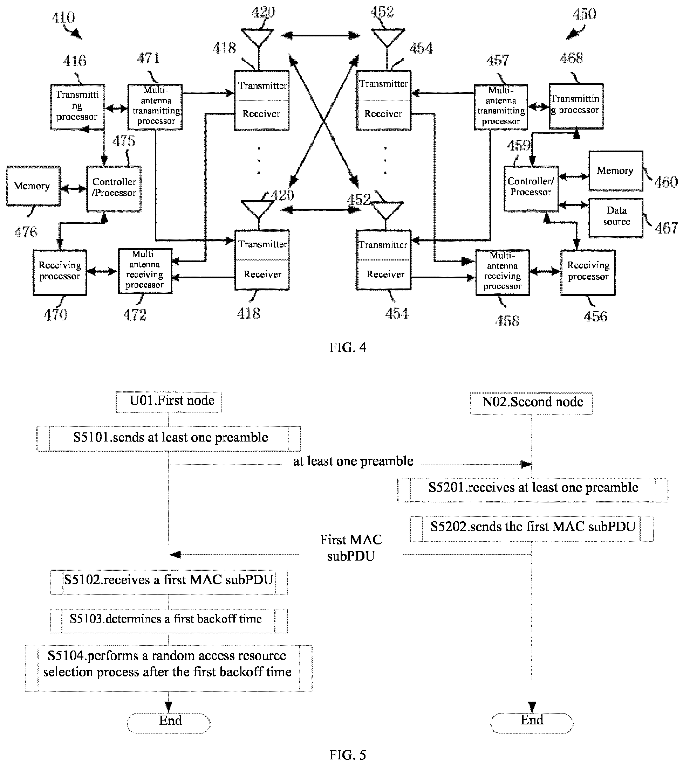

Embodiment 4 shows a schematic diagram of a first communication equipment and a second communication equipment according to the present application, as shown in FIG. 4. FIG. 4 is a block diagram of a first communication equipment 450 and a second communication equipment 410 in communication with each other over an access network.

The first communication equipment 450 comprises a controller/processor 459, a memory 460, a data source 467, a transmitting processor 468, a receiving processor 456, a multi-antenna transmitting processor 457, a multi-antenna receiving processor 458, a transmitter/receiver 454, and an antenna 452.

The second communication equipment 410 comprises a controller/processor 475, a memory 476, a receiving processor 470, a transmitting processor 416, a multi-antenna receiving processor 472, a multi-antenna transmitting processor 471, a transmitter/receiver 418, and an antenna 420.

In the transmission from the second communication equipment 410 to the first communication equipment 450, at the second communication equipment 410, an upper layer data packet from the core network is provided to the controller/processor 475. The controller/processor 475 implements the functionality of L2. In the transmission from the second communication equipment 410 to the first communication equipment 450, the controller/processor 475 provides header compression, encryption, packet segmentation and re-ordering, multiplexing between logical and transport channels, and radio resource assignment to the first communication equipment 450 based on various priority measures. The controller/processor 475 is also responsible for re-transmission of lost packets and signaling to the first communication equipment 450. The transmitting processor 416 and the multi-antenna transmitting processor 471 implement various signal processing functions for L1 (i.e., the physical layer). The transmitting processor 416 implements coding and interleaving to facilitate forward error correction (FEC) at the second communication equipment 410, and mapping of signal clusters based on various modulation schemes (e.g., binary phase shift keying (BPSK), quadrature phase shift keying (QPSK), M-phase shift keying (M-PSK), and M-quadrature amplitude modulation (M-QAM)). The multi-antenna transmitting processor 471 pre-codes coded and modulated symbols in digital space, including codebook-based pre-coding and non-codebook-based pre-coding, and beamforming processing, generating one or a plurality of spatial streams. The transmitting processor 416 then maps each spatial stream to a subcarrier, multiplexes with a reference signal (e.g., pilot) in the time domain and/or frequency domain, and then uses an inverse fast Fourier transform (IFFT) to generate a physical channel of the time domain multi-carrier symbol stream on the carrier. The multi-antenna transmitting processor 471 then sends the analog pre-coding/beamforming operation for the time domain multi-carrier symbol stream. Each transmitter 418 converts the baseband multi-carrier symbol stream provided by the multi-antenna transmitting processor 471 into a radio frequency stream, which is then provided to a different antenna 420.

In the transmission from the second communication equipment 410 to the first communication equipment 450, at the first communication equipment 450, each receiver 454 receives a signal through the respective antenna 452 thereof. Each receiver 454 recovers information that is modulated onto the radio frequency carrier, converts the radio frequency stream into a baseband multi-carrier symbol stream and provides it to the receiving processor 456. The receiving processor 456 and the multi-antenna receiving processor 458 implement various signal processing functions of L1. The multi-antenna receiving processor 458 receives the analog pre-coding/beamforming operation for the baseband multi-carrier symbol stream from the receiver 454. The receiving processor 456 uses fast Fourier transform (FFT) to convert the baseband multi-carrier symbol stream from the time domain to the frequency domain after receiving the analog pre-coding/beamforming operation. In the frequency domain, the physical layer data signal and the reference signal are demultiplexed by the receiving processor 456, wherein the reference signal is used for channel estimation and the data signal recovers any spatial stream destined for the first communication equipment 450 after multi-antenna detection by the multi-antenna receiving processor 458. The symbols on each spatial stream are demodulated and recovered in the receiving processor 456 and generate a soft decision. The receiving processor 456 then decodes and de-interleaves the soft decision to recover upper layer data and control signals transmitted by the second communication equipment 410 over the physical channel. The upper layer data and control signal are then provided to the controller/processor 459. The controller/processor 459 implements the functions of L2. The controller/processor 459 may be associated with a memory 460 storing program code and data. The memory 460 may be referred to as a computer-readable medium. In the transmission from the second communication equipment 410 to the first communication equipment 450, the controller/processor 459 provides demultiplexing between transport and logical channels, packet reassembly, decryption, header decompression, and control signal processing to recover the upper layer data packet from the core network. The upper layer data packet is then provided to all protocol layers above L2. Various control signals may also be provided to L3 for L3 processing.

In the transmission from the first communication equipment 450 to the second communication equipment 410, at the first communication equipment 450, the data source 467 is used to provide an upper layer data packet to the controller/processor 459. The data source 467 represents all protocol layers above L2. Similar to the sending function at the second communication equipment 410 described in the transmission from the second communication equipment 410 to the first communication equipment 450, the controller/processor 459 implements header compression, encryption, packet segmentation and re-ordering based on wireless resource assignment, and multiplexing between logical and transport channels, to implement L2 functions for the user plane and control plane. The controller/processor 459 is also responsible for the re-transmission of lost packets, and signaling to the second communication equipment 410. The transmitting processor 468 performs modulation mapping and channel coding processing, the multi-antenna transmitting processor 457 carries out digital multi-antenna spatial pre-coding, including codebook-based precoding and non-codebook-based pre-coding, and beamforming processing, and then the transmitting processor 468 modulates the generated spatial stream to a multi-carrier/single-carrier symbol stream, which is then sent to a different antenna 452 via the transmitter 454 after the analog pre-coding/beamforming operation by the multi-antenna transmitting processor 457. Each transmitter 454 first converts the baseband symbol stream provided by the multi-antenna transmitting processor 457 into a radio frequency symbol stream and then provides it to the antenna 452.

In the transmission from the first communication equipment 450 to the second communication equipment 410, the function at the second communication equipment 410 is similar to the receiving function at the first communication equipment 450 described in the transmission from the second communication equipment 410 to the first communication equipment 450. Each receiver 418 receives a radio frequency signal through the respective antenna 420 thereof, converts the received radio frequency signal into a baseband signal, and provides the baseband signal to the multi-antenna receiving processor 472 and the receiving processor 470. The receiving processor 470 and the multi-antenna receiving processor 472 collectively implement the functions of L1. The controller/processor 475 implements the function of L2. The controller/processor 475 may be associated with the memory 476 storing program code and data. The memory 476 may be referred to as a computer-readable medium. In the transmission from the first communication equipment 450 to the second communication equipment 410, the controller/processor 475 provides demultiplexing between transport and logical channels, packet reassembly, decryption, header decompression, and control signal processing to recover the upper layer data packet from the UE 450. The upper layer data packet from the controller/processor 475 may be provided to the core network.

As one embodiment, the first communication equipment 450 comprises: at least one processor and at least one memory, wherein the at least one memory comprises a computer program code; the at least one memory and the computer program code are configured to be used with the at least one processor, and the first communication equipment 450 at least: sends at least one preamble according to whether PRACH repetition is performed; in response to the at least one preamble being sent, receives a first MAC subPDU in a first time window, wherein the first MAC subPDU indicates a first backoff parameter value; determines a first backoff time according to the product of at least the first backoff parameter value and a first backoff factor; wherein at least either the first backoff parameter value or the first backoff factor depends on whether PRACH repetition is performed.

As one embodiment, the first communication equipment 450 comprises: a memory storing a computer-readable instruction program that, when executed by at least one processor, generates an action, the action comprising: sending at least one preamble according to whether PRACH repetition is performed; in response to the at least one preamble being sent, receiving a first MAC subPDU in a first time window, wherein the first MAC subPDU indicates a first backoff parameter value; determining a first backoff time according to the product of at least the first backoff parameter value and a first backoff factor; wherein at least either the first backoff parameter value or the first backoff factor depends on whether PRACH repetition is performed.

As one embodiment, the second communication equipment 410 comprises: at least one processor and at least one memory, wherein the at least one memory comprises a computer program code; the at least one memory and the computer program code are configured to be used with the at least one processor. The second communication equipment 410 at least: receives at least one preamble; in response to the at least one preamble being received, sending a first MAC subPDU, wherein the first MAC subPDU indicates a first backoff parameter value; wherein the at least one preamble is sent according to whether PRACH repetition is performed; receives the first MAC subPDU in a first time window; determines a first backoff time according to the product of at least the first backoff parameter value and a first backoff factor; at least either the first backoff parameter value or the first backoff factor depends on whether PRACH repetition is performed.

As one embodiment, the second communication equipment 410 comprises: a memory storing a computer-readable instruction program that, when executed by at least one processor, generates an action, the action comprising: receiving at least one preamble; in response to the at least one preamble being received, sending a first MAC subPDU, wherein the first MAC subPDU indicates a first backoff parameter value; wherein the at least one preamble is sent according to whether PRACH repetition is performed, receiving the first MAC subPDU in a first time window; determining a first backoff time according to the product of at least the first backoff parameter value and a first backoff factor; at least either the first backoff parameter value or the first backoff factor depends on whether PRACH repetition is performed.

As one embodiment, at least one of the antenna 452, the receiver 454, the receiving processor 456, and the controller/processor 459 is used to receive the first MAC subPDU.

As one embodiment, at least one of the antenna 420, the transmitter 418, the transmitting processor 416, and the controller/processor 475 is used to send the first MAC subPDU.

As one embodiment, at least one of the antenna 452, the receiver 454, the receiving processor 456, and the controller/processor 459 is used to receive the first signaling set.

As one embodiment, at least one of the antenna 452, the receiver 454, the receiving processor 456, and the controller/processor 459 is used to receive the first signaling set.

As one embodiment, at least one of the antenna 420, the transmitter 418, the transmitting processor 416, and the controller/processor 475 is used to send at least one signaling in the first signaling set.

As one embodiment, at least one of the antenna 452, the transmitter 454, the transmitting processor 468, and the controller/processor 459 is used to send the at least one preamble.

As one embodiment, at least one of the antenna 420, the receiver 418, the receiving processor 470, and the controller/processor 475 is used to receive the at least one preamble.

As one embodiment, at least one of the antenna 420, the receiver 418, the receiving processor 470, and the controller/processor 475 is used to receive at least one preamble in the at least one preamble.

As one embodiment, the first communication equipment 450 corresponds to a first node in the present application.

As one embodiment, the second communication equipment 410 corresponds to a second node in the present application.

As one embodiment, the first communication equipment 450 is one user equipment.

As one embodiment, the first communication equipment 450 is one user equipment that supports large latency differences.

As one embodiment, the first communication equipment 450 is one user equipment that supports NTN.

As one embodiment, the first communication equipment 450 is one aircraft equipment.

As one embodiment, the first communication equipment 450 has positioning capabilities.

As one embodiment, the first communication equipment 450 does not have positioning capabilities.

As one embodiment, the first communication equipment 450 is one user equipment that supports TN.

As one embodiment, the second communication equipment 410 is one base station equipment (gNB/eNB/ng-eNB).

As one embodiment, the second communication equipment 410 is one base station equipment that supports large latency differences.

As one embodiment, the second communication equipment 410 is one base station equipment that supports NTN.

As one embodiment, the second communication equipment 410 is one satellite equipment.

As one embodiment, the second communication equipment 410 is one aerial platform equipment.

As one embodiment, the second communication equipment 410 is one base station equipment that supports TN.

### Embodiment 5

Embodiment 5 illustrates a flow chart of wireless signal transmission according to one embodiment of the present application, as shown in FIG. 5. It is particularly illustrated that the sequence in the present example does not limit the sequence of signal transmission and implementation in the present application.

The **first node U01,** in Step S5101, sends at least one preamble according to whether PRACH repetition is performed; in Step S5102, in response to the at least one preamble being sent, receives a first MAC subPDU in a first time window, wherein the first MAC subPDU indicates a first backoff parameter value; in Step S5103, determines a first backoff time according to the product of at least the first backoff parameter value and a first backoff factor; in Step S5104, performs a random access resource selection process after the first backoff time.

The **second node N02,** in Step S5201, receives the at least one preamble; in Step S5202, sends the first MAC subPDU.

As one embodiment, at least either the first backoff parameter value or the first backoff factor depends on whether PRACH repetition is performed.

As one embodiment, the first backoff time depends on whether PRACH repetition is performed.

As one embodiment, the first node U01 is one user equipment.

As one embodiment, the first node U01 is one base station equipment.

As one embodiment, the first node U01 is one relay equipment.

As one embodiment, the second node N02 is one base station equipment.

As one embodiment, the second node N02 is one user equipment.

As one embodiment, the second node N02 is one relay equipment.

As one embodiment, the second node N02 comprises one TRP.

As one embodiment, the second node N02 comprises two TRPs.

As one embodiment, the second node N02 comprises a first TRP and a second TRP.

As one embodiment, the second node N02 is a maintenance base station of one serving cell of the first node U01.

As one embodiment, the second node N02 is a maintenance base station of the first cell.

As one embodiment, the first node U01 is one user equipment and the second node N02 is one base station equipment.

As one embodiment, the first node U01 is one user equipment and the second node N02 is one relay equipment.

As one embodiment, the first node U01 is one user equipment and the second node N02 is one user equipment

As one embodiment, the first node U01 is one base station equipment and the second node N02 is one base station equipment.

As one embodiment, the first node U01 is one relay equipment and the second node N02 is one base station equipment.

As one embodiment, the first node U01 and the second node N02 are connected via a Uu interface.

As one embodiment, the first node U01 and the second node N02 are connected via an Xn interface.

As one embodiment, the first node U01 and the second node N02 are connected via an X2 interface.

As one embodiment, the first node U01 and the second node N02 are connected via a PC5 interface.

As one embodiment, the first node U01 and the second node N02 are connected via an air interface.

As one embodiment, the recipient of the at least one preamble is the first TRP.

As one sub-embodiment of this embodiment, the sender of the first PDCCH is the first TRP.

As one sub-embodiment of this embodiment, the sender of the first PDCCH is the second TRP.

As one embodiment, the recipient of the at least one preamble comprises at least the first TRP and the second TRP.

As one sub-embodiment of this embodiment, the sender of the first PDCCH is the first TRP.

As one sub-embodiment of this embodiment, the sender of the first PDCCH is the second TRP.

As one embodiment, during the first backoff time period, the criteria for selecting a CFRA (continuation-free Random Access) resource are not satisfied.

As one embodiment, in response to the first backoff time being determined, the first node U01 performs the random access resource selection process after the first backoff time.

As one embodiment, starting from the instant of determining the first backoff time to after the first backoff time, the first node U01 performs the random access resource selection process.

As one embodiment, starting from the instant of determining that the first random access process is not complete to after the start of the first backoff time, the first node U01 performs the random access resource selection process.

As one embodiment, starting from the instant of determining the first backoff time to after at least the first backoff time, the first node U01 performs the random access resource selection process.

As one embodiment, starting from the instant of determining the first backoff time to after at least the first backoff time, the first node U01 performs the random access resource selection process.

As one embodiment, during the first backoff time period, the first node U01 did not perform the random access resource selection process.

As one embodiment, during the first backoff time period, the random access resource selection process is performed after the first backoff time only when the criteria for reselecting the number of PRACH repetitions are not met.

As one embodiment, the action of "the random access resource selection process is performed after the first backoff time" is not related to whether the criteria for reselecting the number of PRACH repetitions are met during the first backoff time period.

### Embodiment 6

Embodiment 6 exemplifies a flow chart of wireless signal transmission according to another embodiment of the present application, as shown in FIG. 6. It is particularly illustrated that the sequence in the present example does not limit the sequence of signal transmission and implementation in the present application.

The **first node U01,** in Step S6101, receives a first signaling set, wherein the first signaling set indicates at least a first candidate backoff factor; in Step S6102, sets the first backoff factor as a second candidate backoff factor; in Step S6103, determines whether PRACH repetition is performed, if PRACH repetition is performed, it proceeds to Step S6104 (a), otherwise, the Step S6104 (a) is not performed; in Step S6104 (a), sets the first backoff factor as the first candidate backoff factor; in Step S6104 (b), sets the first backoff factor as the second candidate backoff factor; in Step S6105, sets the first backoff factor as the third candidate backoff factor.

The **third node N03,** in Step S6301, sends the first signaling set.

In Embodiment 6, the first backoff factor is one candidate backoff factor in a first candidate backoff factor set, and the first candidate backoff factor set comprises at least a first candidate backoff factor and a second candidate backoff factor; the first backoff factor depends on whether PRACH repetition is performed.

As one embodiment, the third node N03 is the second node N02 in the present application.

As one embodiment, the third node N03 is not the second node N02 in the present application.

As one embodiment, the third node N03 and the second node N02 in the present application are the same.

As one embodiment, the third node N03 and the second node N02 in the present application are different.

As one embodiment, the third node N03 includes a base station equipment.

As one embodiment, the third node N03 includes one relay equipment.

As one embodiment, the third node N03 includes one TRP.

As one embodiment, the third node N03 comprises two TRPs.

As one embodiment, the sender of the first signaling set comprises one node.

As one embodiment, the sender of the first signaling set comprises a plurality of nodes.

As one embodiment, the sender of the first signaling set comprises a maintenance base station of one serving cell of the first node U01.

As one embodiment, the first signaling set comprises at least the former of a RRC message, a MAC CE (Control Element) or a DCI.

As one embodiment, the first signaling set comprises a MAC CE.

As one embodiment, the first signaling set comprises a RRC message and a MAC CE.

As one embodiment, the first signaling set comprises a DCI.

As one embodiment, the first signaling set comprises a RRC message and a DCI.

As one embodiment, the first signaling set comprises at least a RRC message.

As one embodiment, the first signaling set comprises only the RRC message.

As one embodiment, the first signaling set comprises at least one RRC message.

As one embodiment, the first signaling set comprises at least one RRC IE (Information Element).

As one embodiment, the first signaling set comprises at least one RRC field.

As one embodiment, the first signaling set comprises a broadcast message.

As one embodiment, the first signaling set comprises a unicast message.

As one embodiment, the logical channel corresponding to the first signaling set includes BCCH (Broadcast Control Channel).

As one embodiment, the logical channel corresponding to the first signaling set includes DCCH (Dedicated Control Channel).

As one embodiment, the first signaling set comprises a SIB1 (System Information Block 1) message.

As one embodiment, the first signaling set comprises a ServingCellConfigCommonSIB IE.

As one embodiment, the first signaling set comprises a UplinkConfigCommonSIB IE.

As one embodiment, the first signaling set comprises a BWP-UplinkCommon IE.

As one embodiment, the first signaling set comprises a UplinkConfigCommon IE.

As one embodiment, the first signaling set comprises a RACH-ConfigCommon IE.

As one embodiment, the first signaling set includes at least one RRC field in the RACH-ConfigCommon IE.

As one embodiment, one RRC field in the first signaling set indicates the first candidate backoff factor.

As one sub-embodiment of this embodiment, the name of the one RRC field comprises scalingFactorBI.

As one sub-embodiment of this embodiment, the name of the RRC field comprises at least one of scalingFactorBI, Msg1 (Message 1), PRACH, Repetition and -r18.

As one sub-embodiment of this embodiment, the one RRC field is a scalingFactorBI-r18 field.

As one sub-embodiment of this embodiment, the one RRC field is a scalingFactorBI field.

As one sub-embodiment of this embodiment, the one RRC field is not a scalingFactorBI field.

As one sub-embodiment of this embodiment, the one RRC field is a scalingFactorBI r18 field.

As one sub-embodiment of this embodiment, the one RRC field belongs to a RA-Prioritization IE.

As one sub-embodiment of this embodiment, the one RRC field is not a RA-Prioritization IE.

As one embodiment, the first candidate backoff factor is one scalingFactorBI.

As one embodiment, the first candidate backoff factor is one scalingFactorBI configured for PRACH repetition.

As one embodiment, the first candidate backoff factor is configurable.

As one embodiment, the first candidate backoff factor is configured.

As one embodiment, the first candidate backoff factor is configured for PRACH repetition.

As one embodiment, the first candidate backoff factor is configured as one candidate of the first candidate backoff factor.

As one embodiment, at least one candidate of the first candidate backoff factor is greater than 1.

As one embodiment, each candidate of the first candidate backoff factor is greater than 1.

As one embodiment, one candidate of the first candidate backoff factor is 1.

As one embodiment, any candidate of the first candidate backoff factor is not 1.

As one embodiment, a candidate for the first candidate backoff factor comprises an integer greater than 1.

As one embodiment, a candidate for the first candidate backoff factor comprises a non-integer greater than 1.

As one embodiment, a candidate for the first candidate backoff factor comprises at least one of 1.25, 1.5 and 1.75.

As one embodiment, a candidate for the first candidate backoff factor comprises at least one of 2, 4 and 8.

As one embodiment, at least one candidate of the first candidate backoff factor is not greater than 1.

As one embodiment, each candidate of the first candidate backoff factor is not greater than 1.

As one embodiment, a candidate for the first candidate backoff factor comprises 0, 0.25, 0.5, and 0.75.

As one embodiment, a candidate for the first candidate backoff factor comprises at least one of 0, 0.25, 0.5 and 0.75.

As one embodiment, the first candidate backoff factor set comprises only the first candidate backoff factor and the second candidate backoff factor.

As one embodiment, the first candidate backoff factor set comprises at least the first candidate backoff factor, the second candidate backoff factor, and the third candidate backoff factor.

As one embodiment, the second candidate backoff factor is one constant.

As one embodiment, the second candidate backoff factor is not configured.

As one embodiment, the second candidate backoff factor is predefined.

As one embodiment, the second candidate backoff factor is 1.

As one embodiment, the third candidate backoff factor is configurable.

As one embodiment, the third candidate backoff factor is configured by an RRC message.

As one embodiment, a candidate of the third candidate backoff factor is not greater than 1.

As one embodiment, a candidate for the third candidate backoff factor comprises 0, 0.25, 0.5, and 0.75.

As one embodiment, the third candidate backoff factor is not configured.

As one embodiment, the third candidate backoff factor is configured.

As one embodiment, the third candidate backoff factor is configured to NSAG (Network Slide AS (Access Stratum) Group).

As one embodiment, the third candidate backoff factor is configured for BFR (Beam Failure Recovery).

As one embodiment, the third candidate backoff factor is not configured for PRACH repetition.

As one embodiment, the third candidate backoff factor is indicated by one scalingFactorBI field in the first signaling set.

As one embodiment, the third candidate backoff factor is indicated by one scalingFactorBI in one RA-Prioritization IE field in the first signaling set.

As one embodiment, the Step S6102 is optional.

As one embodiment, the Step S6102 is present.

As one embodiment, the Step S6102 is absent.

As one embodiment, the Step S6104 (b) is optional.

As one embodiment, the Step S6104 (b) is present.

As one embodiment, the Step S6104 (b) is absent.

As one embodiment, only one of the Step S6102 and the Step S6104 (b) is present.

As one embodiment, the Step S6102 is present and the Step S6104 (b) is absent.

As one sub-embodiment of this embodiment, during the initialization of the first random access process, the first backoff factor is first set as the second candidate backoff factor; after setting the first backoff factor as the second candidate backoff factor, whether to set the first backoff factor as the first candidate backoff factor is determined according to whether PRACH repetition is performed.

As one sub-embodiment of this embodiment, the "whether to set the first backoff factor as the first candidate backoff factor is determined according to whether PRACH repetition is performed" comprises: only if at least PRACH repetition is performed, setting the first backoff factor as the first candidate backoff factor.

As one sub-embodiment of this embodiment, the "whether to set the first backoff factor as the first candidate backoff factor is determined according to whether PRACH repetition is performed" comprises: as long as PRACH repetition is performed, setting the first backoff factor to the first candidate backoff factor.

As one sub-embodiment of this embodiment, if PRACH repetition is performed, the first backoff factor is set as the first candidate backoff factor.

As one sub-embodiment of this embodiment, the "whether to set the first backoff factor as the first candidate backoff factor is determined according to whether PRACH repetition is performed" comprises: if PRACH repetition is not performed, not setting the first backoff factor as the first candidate backoff factor.

As one sub-embodiment of this embodiment, the "whether to set the first backoff factor as the first candidate backoff factor is determined according to whether PRACH repetition is performed" comprises: the "not setting the first backoff factor as the first candidate backoff factor" comprises: not resetting the first backoff factor.

As one sub-embodiment of this embodiment, the "whether to set the first backoff factor as the first candidate backoff factor is determined according to whether PRACH repetition is performed" comprises: the "not setting the first backoff factor as the first candidate backoff factor" comprises: setting the first backoff factor as the third candidate backoff factor.

As one embodiment, the Step S6102 is absent and the Step S6104 (b) is present.

As one sub-embodiment of this embodiment, during the initialization of the first random access process, the first backoff factor is set according to whether PRACH repetition is performed.

As one sub-embodiment of this embodiment, the "the first backoff factor is set according to whether PRACH repetition is performed" comprises: only if at least PRACH repetition is performed, setting the first backoff factor as the first candidate backoff factor.

As one sub-embodiment of this embodiment, the "the first backoff factor is set according to whether PRACH repetition is performed" comprises: as long as PRACH repetition is performed, setting the first backoff factor as the first candidate backoff factor.

As one sub-embodiment of this embodiment, the "the first backoff factor is set according to whether PRACH repetition is performed" comprises: setting the first backoff factor as the first candidate backoff factor if PRACH repetition is performed.

As one sub-embodiment of this embodiment, the "the first backoff factor is set according to whether PRACH repetition is performed" comprises: if PRACH repetition is not performed, setting the first backoff factor as the second candidate backoff factor.

As one sub-embodiment of this embodiment, the "the first backoff factor is set according to whether PRACH repetition is performed" comprises: if PRACH repetition is not performed, setting the first backoff factor as the third candidate backoff factor.

As one embodiment, the Step S6105 is optional.

As one embodiment, the Step S6105 is present.

As one sub-embodiment of this embodiment, PRACH repetition is not performed.

As one embodiment, the Step S6105 is absent.

As one sub-embodiment of this embodiment, PRACH repetition is not performed.

As one sub-embodiment of this embodiment, PRACH repetition is performed.

As one embodiment, the Step S6105 and the Step S6104 (a) are present when they are different.

As one sub-embodiment of this embodiment, the Step S6104 (a) is absent and the Step S6105 is absent.

As one sub-embodiment of this embodiment, the Step S6104 (a) is present and the Step S6105 is absent.

As one sub-embodiment of this embodiment, the Step S6104 (a) is absent and the Step S6105 is present.

As one embodiment, whether the Step S6105 is present is associated with whether the third candidate backoff factor is configured.

As one embodiment, whether the Step S6105 is present is related to the trigger conditions of the first random access process.

### Embodiment 7

Embodiment 7 exemplifies a flow chart of wireless signal transmission according to yet another embodiment of the present application, as shown in FIG. 7. It is particularly illustrated that the sequence in the present example does not limit the sequence of signal transmission and implementation in the present application.

The **first node U01,** in Step S7101, receives a first MAC subPDU; in Step S7102, sets a first backoff variable as the product of the first backoff parameter value and the first backoff factor; in Step S7103, determines the first backoff time according to at least the first backoff variable.

In Embodiment 7, the phrase "determines a first backoff time according to the product of at least the first backoff parameter value and a first backoff factor" comprises: setting a first backoff variable as the product of the first backoff parameter value and the first backoff factor; determining the first backoff time according to at least the first backoff variable.

As one embodiment, the first node U01 sends at least one preamble according to whether PRACH repetition is performed; in response to the at least one preamble being sent, receives a first MAC subPDU in a first time window, wherein the first MAC subPDU indicates a first backoff parameter value; in response to the first MAC subPDU being received, sets a first backoff variable as the product of the first backoff parameter value and the first backoff factor; in response to the first random access process not being completed, determines the first backoff time according to at least the first backoff variable.

As one embodiment, during the first random access process, PRACH repetition is not determined to be performed; at least one preamble is sent; in response to the at least one preamble being sent, a first MAC subPDU is received in a first time window, wherein the first MAC subPDU indicates a first backoff parameter value; a first backoff variable is set as the product of the first backoff parameter value and the first backoff factor; the first backoff time is determined according to at least the first backoff variable; the first backoff factor is the second candidate backoff factor; the first backoff parameter value is the second candidate backoff parameter value.

As one embodiment, during the first random access process, PRACH repetition is determined to be performed; at least one preamble is sent; in response to the at least one preamble being sent, a first MAC subPDU is received in a first time window, wherein the first MAC subPDU indicates a first backoff parameter value; the first backoff variable is set according to the product of the first backoff parameter value and the first backoff factor; the first backoff time is determined according to the first backoff variable; the first backoff factor is the second candidate backoff factor; the first backoff parameter value is the second candidate backoff parameter value.

As one sub-embodiment of this embodiment, the first backoff factor is the first candidate backoff factor; the first backoff parameter value is the first candidate backoff parameter value.

As one sub-embodiment of this embodiment, the first backoff factor is the second candidate backoff factor; the first backoff parameter value is the first candidate backoff parameter value.

As one sub-embodiment of this embodiment, the first backoff factor is the first candidate backoff factor; the first backoff parameter value is the second candidate backoff parameter value.

As one embodiment, the first backoff variable is one variable.

As one embodiment, the first backoff variable is stored.

As one embodiment, the first backoff variable is recorded.

As one embodiment, the unit of the first backoff variable is milliseconds.

As one embodiment, the unit of the first backoff variable is the same as the unit of the first backoff parameter value.

As one embodiment, the first backoff variable is used to record the product of the first backoff parameter value and the first backoff factor.

As one embodiment, if PRACH repetition is not performed, the first backoff variable is PREAMBLE_BACKOFF.

As one embodiment, if PRACH repetition is performed, the first backoff variable is PREAMBLE_BACKOFF.

As one embodiment, if PRACH repetition is performed, the first backoff variable is not PREAMBLE_BACKOFF.

As one embodiment, if PRACH repetition is performed, the name of the first backoff variable comprises PREAMBLE_BACKOFF.

As one embodiment, if PRACH repetition is performed, the name of the first backoff variable comprises at least one of PREAMBLE_BACKOFF, Msg1 (Message 1), PRACH and Repetition.

As one embodiment, the "the first backoff variable is set according to the product of the first backoff parameter value and the first backoff factor" comprises: setting the first backoff variable as the first backoff parameter value multiplied by the first backoff factor.

As one embodiment, the "the first backoff variable is set according to the product of the first backoff parameter value and the first backoff factor" comprises: the first backoff variable being equal to the product of the first backoff parameter value and the first backoff factor.

As one embodiment, in response to the first MAC subPDU being received, the first backoff variable is set as the product of the first backoff parameter value and the first backoff factor.

As one embodiment, when the first MAC subPDU is received and the first MAC subPDU comprises one BI field, the first backoff variable is set as the product of the first backoff parameter value and the first backoff factor.

As one embodiment, in response to the first random access process not being completed, the first backoff time is determined according to the first backoff variable.

As one embodiment, once it is determined that the first random access process is not complete, the first backoff time is determined according to the first backoff variable.

As one embodiment, once the first random access process is considered to not be complete, the first backoff time is determined according to the first backoff variable.

As one embodiment, the "the first backoff time is determined according to the first backoff variable" comprises: selecting the first backoff time according to the first backoff variable.

As one embodiment, the "the first backoff time is determined according to the first backoff variable" comprises: determining the first backoff time from 0 to the first backoff variable.

As one embodiment, the "the first backoff time is determined according to the first backoff variable" comprises: selecting one random backoff time from 0 to the first backoff variable as the first backoff time.

As one embodiment, the "the first backoff time is determined according to the first backoff variable" comprises: randomly selecting the first backoff time from 0 to the first backoff variable according to uniform distribution.

### Embodiment 8

Embodiment 8 exemplifies a schematic diagram of a first backoff parameter value as one candidate backoff parameter value in a first candidate backoff parameter value set, according to one embodiment of the present application.

In Embodiment 8, the first backoff parameter value is one candidate backoff parameter value in a first candidate backoff parameter value set, and the first candidate backoff parameter value set comprises at least a first candidate backoff parameter value and a second candidate backoff parameter value; the first backoff parameter value depends on whether PRACH repetition is performed.

As one embodiment, the first candidate backoff parameter value set comprises only the first candidate backoff parameter value and the second candidate backoff parameter value.

As one embodiment, the first candidate backoff parameter value set comprises another candidate backoff parameter value other than the first candidate backoff parameter value and the second candidate backoff parameter value.

As one embodiment, each candidate backoff parameter value in the first candidate backoff parameter value set is determined by table look-up.

As one embodiment, at least one candidate backoff parameter value in the first candidate backoff parameter value set is determined by table look-up.

As one embodiment, the presence of one candidate backoff parameter value in the first candidate backoff parameter value set is predefined.

As one embodiment, the first candidate backoff parameter value and the second candidate backoff parameter value are equal.

As one embodiment, the first candidate backoff parameter value and the second candidate backoff parameter value are not equal.

As one embodiment, one of the first candidate backoff parameter value and the second candidate backoff parameter value is reserved.

As one embodiment, neither the first candidate backoff parameter value and the second candidate backoff parameter value are reserved.

As one embodiment, the "the first backoff parameter value depends on whether PRACH repetition is performed" comprises: only if at least PRACH repetition is performed, the first backoff parameter value being the first candidate backoff parameter value.

As one embodiment, the "the first backoff parameter value depends on whether PRACH repetition is performed" comprises: as long as PRACH repetition is performed, the first backoff parameter value being the first candidate backoff parameter value.

As one embodiment, the "the first backoff parameter value depends on whether PRACH repetition is performed" comprises: if PRACH repetition is performed, the first backoff parameter value being the first candidate backoff parameter value.

As one embodiment, the "the first backoff parameter value depends on whether PRACH repetition is performed" comprises: if PRACH repetition is not performed, the first backoff parameter value being the second candidate backoff parameter value.

As one embodiment, the first MAC subPDU indicates at least the first backoff parameter value.

As one embodiment, the first MAC subPDU indicates the first candidate backoff parameter value set.

As one embodiment, the first MAC subPDU indicates one candidate backoff parameter value in the first candidate backoff parameter value set,

As one embodiment, the first MAC subPDU indicates the first candidate backoff parameter value or the second candidate backoff parameter value.

As one embodiment, only if at least PRACH repetition is performed, the first MAC subPDU indicates the first candidate backoff parameter value, and the first backoff parameter value is the first candidate backoff parameter value.

As one embodiment, as long as PRACH repetition is performed, the first MAC subPDU indicates the first candidate backoff parameter value, and the first backoff parameter value is the first candidate backoff parameter value.

As one embodiment, if PRACH repetition is performed, the first MAC subPDU indicates the first candidate backoff parameter value, and the first backoff parameter value is the first candidate backoff parameter value.

As one embodiment, if PRACH repetition is not performed, the first MAC subPDU indicates the second candidate backoff parameter value, and the first backoff parameter value is the second candidate backoff parameter value.

### Embodiment 9

Embodiment 9 exemplifies a schematic diagram of a first candidate backoff parameter value depending on a first backoff table and a second candidate backoff parameter value depending on a second backoff table, according to one embodiment of the present application, as shown in FIG. 9.

In Embodiment 9, the first candidate backoff parameter value depends on the first backoff table, and the second candidate backoff parameter value depends on the second backoff table; the first backoff table comprises M1 indexes, M2 indexes in the M1 indexes indicate M2 candidate backoff parameter values; the second backoff table comprises N1 indexes, and N2 indexes in the N1 indexes indicate N2 candidate backoff parameter values; the first backoff table differs from the second backoff table.

As one embodiment, the first node stores the first backoff table and the second backoff table.

As one embodiment, the first backoff table is used for PRACH repetition.

As one embodiment, the first backoff table is only used for PRACH repetition.

As one embodiment, the first backoff table is not Table 7.2-1 in Section 7.2 in 3GPP TS 38.321.

As one embodiment, the second backoff table is not used for PRACH repetition.

As one embodiment, the second backoff table is Table 7.2-1 in Section 7.2 in 3GPP TS 38.321.

As one embodiment, the first backoff table is not Table 7.2-1 in Section 7.2 in 3GPP TS 38.321, and the second backoff table is Table 7.2-1 in Section 7.2 in 3GPP TS 38.321.

As one embodiment, both the first backoff table and the second backoff table are predefined.

As one embodiment, the first backoff table and the second backoff table are two tables.

As one embodiment, any index in the first backoff table is an integer not smaller than 0 and not greater than the M1-1.

As one embodiment, if an index i in the first backoff table is not smaller than 0 and not greater than the M2-1, the index i corresponds to a candidate backoff parameter value #i.

As one embodiment, if the index i in the first backoff table is greater than the M2-1, the index i is reserved.

As one embodiment, if the index i in the first backoff table is greater than the M2-1, the index i does not indicate any candidate backoff parameter value.

As one embodiment, the M1 is greater than the M2.

As one embodiment, the M1 is equal to the M2.

As one embodiment, the M1 is equal to 16, and the M2 is equal to 13.

As one embodiment, the M1 is equal to 16, and the M2 is equal to 14.

As one embodiment, the M1 is equal to 16, and the M2 is equal to 15.

As one embodiment, the M1 is equal to 16, and the M2 is equal to 16.

As one embodiment, any index in the second backoff table is an integer not smaller than 0 and not greater than the N1-1.

As one embodiment, if an index j in the second backoff table is not smaller than 0 and not greater than the N2-1, the index j corresponds to a candidate backoff parameter value j.

As one embodiment, if the index j in the second backoff table is greater than the N2-1, the index j is reserved.

As one embodiment, if the index j in the second backoff table is greater than the N2-1, the index j does not indicate any candidate backoff parameter value.

As one embodiment, the N1 is greater than the N2.

As one embodiment, the N1 is equal to the N2.

As one embodiment, the N1 is equal to 16, and the N2 is equal to 14.

As one embodiment, the N1 is equal to 16, and the N2 is equal to 15.

As one embodiment, the M1 and the N1 are not equal.

As one embodiment, the M1 and the N1 are equal.

As one sub-embodiment of this embodiment, the M2 and the N2 are equal.

As one sub-embodiment of this embodiment, the M2 and the N2 are not equal.

As one embodiment, the candidate backoff parameter value indicated by index i in the first backoff table and the candidate backoff parameter value indicated by index j in the first backoff table are not equal; the index i in the first backoff table and the second backoff table are equal.

As one sub-embodiment of this embodiment, the i is an integer not smaller than 0 and not greater than the M2-1.

As one sub-embodiment of this embodiment, the i is any integer in M0 integers, no integer in the M0 integers is smaller than 0 and greater than the M2-1, the M0 is smaller than the M2 and the M0 is greater than 0.

As one sub-embodiment of this embodiment, the M0 integers only comprise 0.

As one sub-embodiment of this embodiment, the M0 integers only comprise 0 and 1.

As one embodiment, the first candidate backoff parameter value is one candidate backoff parameter value in the first backoff table.

As one embodiment, the first candidate backoff parameter value is a candidate backoff parameter value indicated by the first index in the first backoff table.

As one embodiment, the first candidate backoff parameter value belongs to the first backoff table.

As one embodiment, the first candidate backoff parameter value is determined in the first backoff table.

As one embodiment, the second candidate backoff parameter value is one candidate backoff parameter value in the second backoff table.

As one embodiment, the second candidate backoff parameter value is a candidate backoff parameter value indicated by the second index in the second backoff table.

As one embodiment, the second candidate backoff parameter value belongs to the second backoff table.

As one embodiment, the second candidate backoff parameter value is determined in the second backoff table.

As one embodiment, the first MAC subPDU indicates a first index.

As one embodiment, the first MAC subPDU is set as a first index.

As one embodiment, the first index is an integer that is not smaller than 0 and not greater than the M2-1.

As one embodiment, the first index is one index in the M2 indexes.

As one embodiment, the first index indicates the first candidate backoff parameter value in the first backoff table.

As one embodiment, the first index is an integer that is not smaller than 0 and not greater than the N2-1.

As one embodiment, the first index is one index in the N2 indexes.

As one embodiment, the first index indicates the second candidate backoff parameter value in the second backoff table.

As one embodiment, the first index is reserved in the first backoff table.

As one embodiment, the first index is reserved in the second backoff table.

As one embodiment, the first index indicates the first candidate backoff parameter value in the first backoff table; and in the second backoff table, the first index indicates the second candidate backoff parameter value.

As one embodiment, the first index indicates the first candidate backoff parameter value in the first backoff table; the first index is reserved in the second backoff table.

As one embodiment, the first index is reserved in the first backoff table; the first index indicates the second candidate backoff parameter value in the second backoff table.

As one embodiment, only if at least PRACH repetition is performed. the first backoff parameter value is determined in the first backoff table.

As one embodiment, as long as PRACH repetition is performed, the first backoff parameter value is determined in the first backoff table.

As one embodiment, if PRACH repetition is performed, the first backoff parameter value is determined in the first backoff table.

As one embodiment, if PRACH repetition is not performed, the first backoff parameter value is determined in the second backoff table.

As one embodiment, only if at least PRACH repetition is performed, the first MAC subPDU indicates the first candidate backoff parameter value in the first backoff table.

As one embodiment, as long as PRACH repetition is performed, the first MAC subPDU indicates the first candidate backoff parameter value in the first backoff table.

As one embodiment, if PRACH repetition is performed, the first MAC subPDU indicates the first candidate backoff parameter value in the first backoff table.

As one embodiment, if PRACH repetition is not performed, the first MAC subPDU indicates the second candidate backoff parameter value in the second backoff table.

As one embodiment, only if at least PRACH repetition is performed. the first index in the first MAC subPDU indicates the first candidate backoff parameter value in the first backoff table.

As one embodiment, as long as PRACH repetition is performed, the first index in the first MAC subPDU indicates the first candidate backoff parameter value in the first backoff table.

As one embodiment, if PRACH repetition is performed, the first index in the first MAC subPDU indicates the first candidate backoff parameter value in the first backoff table.

As one embodiment, if PRACH repetition is not performed, the first index in the first MAC subPDU indicates the second candidate backoff parameter value in the second backoff table.

As one embodiment, if PRACH repetition is not performed, the first backoff parameter value is determined in the second backoff table.

As one embodiment, if PRACH repetition is not performed, the first backoff parameter value is the second candidate backoff parameter value indicated by the first index in the second backoff table.

As one embodiment, if PRACH repetition is not performed, the first backoff parameter value is the second candidate backoff parameter value indicated by the first index in the second backoff table.

**Table 9.1 First Backoff Table**

| Index | Candidate Backoff Parameter Value (millisecond) |
|---|---|
| 0 | Candidate backoff parameter value #0 |
| 1 | Candidate backoff parameter value #1 |
| ...... | ...... |
| i | Candidate backoff parameter value #i |
| ...... | ...... |
| M1-2 | Candidate backoff parameter value # M1-2/reserved |
| M1-1 | Candidate backoff parameter value M1-1/reserved |

**Table 9.2 Second Backoff Table**

| Index | Candidate Backoff Parameter Value (millisecond) |
|---|---|
| 0 | Candidate backoff parameter value #0 |
| 1 | Candidate backoff parameter value #1 |
| ...... | ...... |
| j | Candidate backoff parameter value #j |
| ...... | ...... |
| N1-2 | Candidate backoff parameter value # N1-2/reserved |
| N1-1 | Candidate backoff parameter value N1-1/reserved |

### Embodiment 10

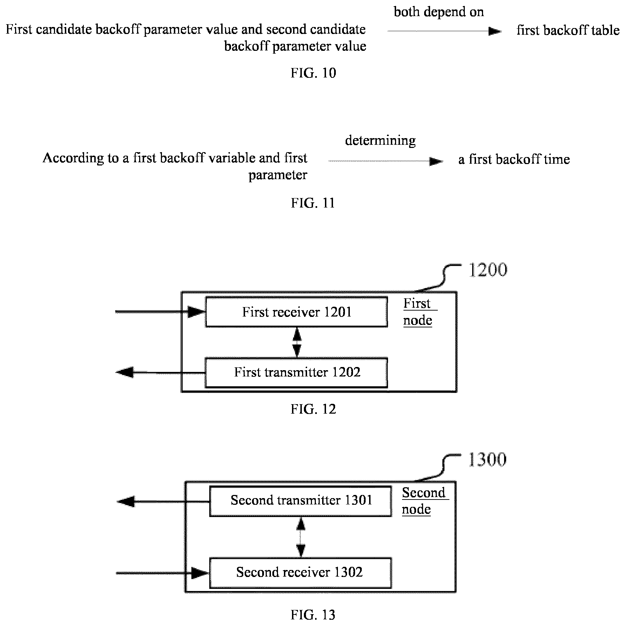

Embodiment 10 exemplifies a schematic diagram of both a first candidate backoff parameter value and a second candidate backoff parameter value depending on a first backoff table, according to one embodiment of the present application, as shown in FIG. 10.

In Embodiment 10, both the first candidate backoff parameter value and the second candidate backoff parameter value depend on a first backoff table, wherein the first backoff table comprises Q1 indexes; Q2 indexes in the Q1 indexes indicate Q2 candidate backoff parameter values; Q3 indexes in the Q1 indexes indicate Q3 candidate backoff parameter values; the first candidate backoff parameter value is one candidate backoff parameter value in the Q2 candidate backoff parameter values, and the second candidate backoff parameter value is one candidate backoff parameter value in the Q3 candidate backoff parameter values; the first candidate backoff parameter value and the second candidate backoff parameter value are associated with the same index.

As one embodiment, the first candidate backoff parameter value is one candidate backoff parameter value in the first backoff table and the second candidate backoff parameter value is another candidate backoff parameter value in the first backoff table.

As one embodiment, the first candidate backoff parameter value is a candidate backoff parameter value indicated by the first index in the first backoff table, and the second candidate backoff parameter value is another candidate backoff parameter value indicated by the first index in the first backoff table.

As one embodiment, the first candidate backoff parameter value belongs to the first backoff table and the second candidate backoff parameter value belongs to the first backoff table.

As one embodiment, the first candidate backoff parameter value or the second candidate backoff parameter value is determined in the first backoff table.

As one embodiment, the first backoff table is predefined.

As one embodiment, the first backoff table includes Table 7.2-1 in Section 7.2 in 3GPP TS 38.321.

As one embodiment, for PRACH repetition, if the index #i in the first backoff table is not smaller than 0 and not greater than the Q2-1, the index #i corresponds to the candidate backoff parameter value #i.

As one embodiment, for PRACH repetition, if the index i in the first backoff table is greater than the index i of the Q2-1, the index #i is reserved.

As one embodiment, for PRACH repetition, if the index i in the first backoff table is greater than the Q2-1, the index #i does not indicate any candidate backoff parameter value.

As one embodiment, for non-PRACH repetition, if the index #j in the first backoff table is not smaller than 0 and not greater than the Q3-1, the index #j corresponds to the candidate backoff parameter value #j.

As one embodiment, for non-PRACH repetition, if the index j in the first backoff table is greater than the index Q3-1, the index #j is reserved.

As one embodiment, for non-PRACH repetition, if the index j in the first backoff table is greater than the Q3-1, the index #j does not indicate any candidate backoff parameter value.

As one embodiment, the Q1 is a positive integer.

As one embodiment, the Q1 is equal to 16.

As one embodiment, the Q1 is equal to 32.

As one embodiment, the Q1 is not smaller than the Q2.

As one embodiment, the Q1 is not smaller than the Q3.

As one embodiment, the Q1 is greater than the Q3.

As one embodiment, the Q2 candidate backoff parameter values are used for PRACH repetition.

As one embodiment, the Q2 candidate backoff parameter values are only used for PRACH repetition.

As one embodiment, the Q3 candidate backoff parameter values are not used for PRACH repetition.

As one embodiment, the Q2 and the Q3 are equal.

As one embodiment, the Q2 and the Q3 are not equal.

As one embodiment, the Q2 is greater than the Q3.

As one embodiment, the Q2 is smaller than the Q3.

As one embodiment, there is at least one different candidate backoff parameter value in the Q2 candidate backoff parameter values and the Q3 candidate backoff parameter values.

As one embodiment, the first MAC subPDU indicates a first index.

As one embodiment, the first MAC subPDU is set as a first index.

As one embodiment, the first index is an integer that is not smaller than 0 and not greater than the Q2-1.

As one embodiment, the first index is an integer that is not smaller than 0 and not greater than the Q3-1.

As one embodiment, the first index is one index in the Q2 indexes.

As one embodiment, the first index is one index in the Q3 indexes.

As one embodiment, the first candidate backoff parameter value and the second candidate backoff parameter value are associated with the first index.

As one embodiment, the first index indicates the first candidate backoff parameter value and the second candidate backoff parameter value.

As one embodiment, whether PRACH repetition is performed is used to determine whether the first backoff parameter value is determined in the Q2 candidate backoff parameter values or the first backoff parameter value is determined in the Q3 candidate backoff parameter values.

As one embodiment, only if at least PRACH repetition is performed, the first backoff parameter value is the first candidate backoff parameter value indicated by the first index in the Q2 candidate backoff parameter values.

As one embodiment, as long as PRACH repetition is performed, the first backoff parameter value is the first candidate backoff parameter value indicated by the first index in the Q2 candidate backoff parameter values.

As one embodiment, if PRACH repetition is performed, the first backoff parameter value is the first candidate backoff parameter value indicated by the first index in the Q2 candidate backoff parameter values.

As one embodiment, if PRACH repetition is not performed, the first backoff parameter value is the second candidate backoff parameter value indicated by the first index in the Q3 candidate backoff parameter values.

As one embodiment, if PRACH repetition is not performed, the first backoff parameter value is the second candidate backoff parameter value indicated by the first index in the Q3 candidate backoff parameter values.

As one embodiment, the first backoff table comprises three columns.

As one sub-embodiment of this embodiment, the first column in the first backoff table comprises the Q1 indexes, the second column in the first backoff table comprises the Q2 candidate backoff parameter values, and the third column in the first backoff table comprises the Q3 candidate backoff parameter values.

As one sub-embodiment of this embodiment, the first column in the first backoff table comprises the Q1 indexes, the second column in the first backoff table comprises the Q3 candidate backoff parameter values, and the third column in the first backoff table comprises the Q2 candidate backoff parameter values.

As one sub-embodiment of this embodiment, Table 10.1 is one the first backoff table; the first column in Table 10.1 comprises the 16 indexes, the second column in Table 10.1 comprises the Q2 candidate backoff parameter values, and the third column in the first backoff table comprises the Q3 candidate backoff parameter values; the third column in Table 10.1 is used for PRACH repetition; the Q2 is equal to 14; the Q3 is not greater than 16.

As one ancillary embodiment of this sub-embodiment, for PRACH repetition, at least one of the candidate backoff parameter value corresponding to the index 0 and the candidate backoff parameter value corresponding to the index 1 is reserved.

As one ancillary embodiment of this sub-embodiment, for PRACH repetition, the candidate backoff parameter value corresponding to the index 0 and the candidate backoff parameter value corresponding to the index 1 are not reserved.

As one ancillary embodiment of this sub-embodiment, for PRACH repetition, at least one of the candidate backoff parameter value corresponding to the index 14 and the candidate backoff parameter value corresponding to the index 15 is not reserved.

As one ancillary embodiment of this sub-embodiment, for PRACH repetition, the candidate backoff parameter value corresponding to the index 14 and the candidate backoff parameter value corresponding to the index 15 are reserved.

**Table 10.1 First Backoff Table**

| Index | Candidate Backoff Parameter =~ Value (millisecond) | Candidate Backoff Parameter Value (millisecond) |
|---|---|---|
| 0 | 5 | Candidate backoff parameter value #0/reserved |
| 1 | 10 | Candidate backoff parameter value #1/reserved |
| 2 | 20 | Candidate backoff parameter value #2 |
| 3 | 30 | Candidate backoff parameter value #3 |
| 4 | 40 | Candidate backoff parameter value #4 |
| 5 | 60 | Candidate backoff parameter value #5 |
| 6 | 80 | Candidate backoff parameter value #6 |
| 7 | 120 | Candidate backoff parameter value #7 |
| 8 | 160 | Candidate backoff parameter value #8 |
| 9 | 240 | Candidate backoff parameter value #9 |
| 10 | 320 | Candidate backoff parameter value #10 |
| 11 | 480 | Candidate backoff parameter value #11 |
| 12 | 960 | Candidate backoff parameter value #12 |
| 13 | 1,920 | Candidate backoff parameter value #13 |
| 14 | Reserved | Candidate backoff parameter value #14/reserved |
| 15 | Reserved | Candidate backoff parameter value #15/reserved |

As one embodiment, the first backoff table comprises two columns.

As one sub-embodiment of this embodiment, the first column in the first backoff table comprises the Q1 indexes.

As one sub-embodiment of this embodiment, the second column in the first backoff table comprises the Q3 candidate backoff parameter values.

As one sub-embodiment of this embodiment, the second column in the first backoff table is default for non-PRACH repetition.

As one sub-embodiment of this embodiment, for non-PRACH repetition, the second column in the first backoff table corresponds to the Q3 candidate backoff parameter values.

As one sub-embodiment of this embodiment, for PRACH repetition, the second column in the first backoff table corresponds to the Q2 candidate backoff parameter values.

As one sub-embodiment of this embodiment, only if PRACH repetition is performed, the second column in the first backoff table corresponds to the Q2 candidate backoff parameter values.

As one sub-embodiment of this embodiment, Table 10.2 is one the first backoff table; the first column in Table 10.1 comprises the 16 indexes, and the second column in Table 10.2 comprises the 14 candidate backoff parameter values for non-PRACH repetition; for PRACH repetition, the second column in the first backoff table corresponds to the Q2 candidate backoff parameter values; the Q2 is not greater than 16.

As one ancillary embodiment of this sub-embodiment, for PRACH repetition, the candidate backoff parameter value corresponding to the index 0 is not equal to 5.

As one ancillary embodiment of this sub-embodiment, for PRACH repetition, the candidate backoff parameter value corresponding to the index 0 is equal to 5.

As one ancillary embodiment of this sub-embodiment, for PRACH repetition, the candidate backoff parameter value corresponding to the index 1 is not equal to 10.

As one ancillary embodiment of this sub-embodiment, for PRACH repetition, the candidate backoff parameter value corresponding to the index 1 is equal to 10.

As one ancillary embodiment of this sub-embodiment, for PRACH repetition, the candidate backoff parameter value corresponding to the index 14 is not reserved.

As one ancillary embodiment of this sub-embodiment, for PRACH repetition, the candidate backoff parameter value corresponding to the index 14 is reserved.

As one ancillary embodiment of this sub-embodiment, for PRACH repetition, the candidate backoff parameter value corresponding to the index 15 is not reserved.

As one ancillary embodiment of this sub-embodiment, for PRACH repetition, the candidate backoff parameter value corresponding to the index 15 is reserved.

**Table 10.2 First Backoff Table**

| Index | Candidate Backoff Parameter Value (millisecond) |
|---|---|
| 0 | 5 |
| 1 | 10 |
| 2 | 20 |
| 3 | 30 |
| 4 | 40 |
| 5 | 60 |
| 6 | 80 |
| 7 | 120 |
| 8 | 160 |
| 9 | 240 |
| 10 | 320 |
| 11 | 480 |
| 12 | 960 |
| 13 | 1,920 |
| 14 | Reserved |
| 15 | Reserved |

### Embodiment 11

Embodiment 11 exemplifies a schematic diagram of determining a first backoff time according to a first backoff variable and a first parameter, according to one embodiment of the present application, as shown in FIG. 11.

In Embodiment 11, the phrase "determining the first backoff time according to at least the first backoff variable" comprises: determining the first backoff time according to the first backoff variable and a first parameter; the first parameter is related to the number of PRACH repetitions; PRACH repetition is performed.

As one embodiment, if only PRACH repetition is performed, the first backoff time is determined according to the first backoff variable and a first parameter.

As one embodiment, during the first random access process, PRACH repetition is determined to be performed; at least one preamble is sent; in response to the at least one preamble being sent, a first MAC subPDU is received in a first time window, and the first MAC subPDU indicates a first backoff parameter value; a first backoff variable is set as the product of the first backoff parameter value and the first backoff factor; the first backoff time is determined according to the first backoff variable and a first parameter; the first parameter is related to the number of PRACH repetitions.

As one sub-embodiment of this embodiment, the first backoff factor is the first candidate backoff factor; the first backoff parameter value is the first candidate backoff parameter value.

As one sub-embodiment of this embodiment, the first backoff factor is the second candidate backoff factor; the first backoff parameter value is the first candidate backoff parameter value.

As one sub-embodiment of this embodiment, the first backoff factor is the first candidate backoff factor; the first backoff parameter value is the second candidate backoff parameter value.

As one sub-embodiment of this embodiment, the first backoff factor is the second candidate backoff factor; the first backoff parameter value is the second candidate backoff parameter value.

As one embodiment, the first parameter is related to the number of PRACH repetitions corresponding to the at least one preamble.

As one embodiment, the first parameter is related to the number of PRACH repetitions corresponding to the at least one preamble.

As one embodiment, the first parameter is linearly related to the number of PRACH repetitions corresponding to the at least one preamble.

As one embodiment, the first parameter is linearly related to the reciprocal of the number of PRACH repetitions corresponding to the at least one preamble.

As one embodiment, the first parameter is related to the number of PRACH repetitions corresponding to the at least one preamble during the first random access process.

As one embodiment, the first parameter is related to the number of PRACH repetitions corresponding to the at least one preamble during the first random access process.

As one embodiment, the first parameter is linearly related to the number of PRACH repetitions corresponding to the at least one preamble during the first random access process.

As one embodiment, the first parameter is linearly related to the reciprocal of the number of PRACH repetitions corresponding to the at least one preamble during the first random access process.

As one embodiment, the first parameter is the number of PRACH repetitions corresponding to the at least one preamble.

As one embodiment, the first parameter is the number of preambles in the at least one preamble.

As one embodiment, the first parameter is the number of time-frequency resources occupied by the at least one preamble.

As one embodiment, the first parameter is the number of PRACH repetitions corresponding to a random access resource group associated with the at least one preamble.

As one embodiment, the "determining the first backoff time according to the first backoff variable and a first parameter" comprises: determining the second backoff time according to the first backoff variable, and determining the first backoff time according to the second backoff time and the first parameter.

As one sub-embodiment of this embodiment, the second backoff time is determined from 0 to the first backoff variable.

As one sub-embodiment of this embodiment, one random backoff time is selected from 0 to the first backoff variable as the second backoff time.

As one sub-embodiment of this embodiment, the second backoff time is randomly selected from 0 and the first backoff variable according to uniform distribution.

As one sub-embodiment of this embodiment, the first backoff time is related to (the product of the second backoff time and the first parameter).

As one sub-embodiment of this embodiment, the first backoff time is equal to (the product of the second backoff time and the first parameter).

As one sub-embodiment of this embodiment, the first backoff time is linearly related to (the product of the second backoff time and the first parameter).

As one sub-embodiment of this embodiment, the first backoff time = the second backoff time × the first parameter.

As one embodiment, the "determining the first backoff time according to the first backoff variable and a first parameter" comprises: determining a second backoff variable according to the first backoff variable and the first parameter and determining the first backoff time according to the second backoff variable.

As one sub-embodiment of this embodiment, the phrase "determines a first backoff time according to the product of at least the first backoff parameter value and a first backoff factor" comprises: setting a second backoff variable as the product of the first backoff parameter value, the first backoff factor. and the first parameter; determining the first backoff time according to at least the second backoff variable.

As one sub-embodiment of this embodiment, the first backoff variable is the product of the first backoff parameter value and the first backoff factor.

As one sub-embodiment of this embodiment, the first backoff variable may be replaced by: the product of the first backoff parameter value and the first backoff factor.

As one sub-embodiment of this embodiment, the "determining a second backoff variable according to the first backoff variable and the first parameter" comprises: the second backoff variable depending on the first backoff variable and the first parameter.

As one sub-embodiment of this embodiment, the "determining a second backoff variable according to the first backoff variable and the first parameter" comprises: the second backoff variable being related to both the first backoff variable and the first parameter.

As one sub-embodiment of this embodiment, the second backoff variable is related to (the product of the first backoff variable and the first parameter).

As one sub-embodiment of this embodiment, the second backoff variable and (the product of the first backoff variable and the first parameter) are equal.

As one sub-embodiment of this embodiment, the second backoff variable is linearly related to (the product of the first backoff variable and the first parameter).

As one sub-embodiment of this embodiment, the second backoff variable = the first backoff variable × the first parameter.

As one sub-embodiment of this embodiment, the first backoff time is determined from 0 to the second backoff variable.

As one sub-embodiment of this embodiment, one random backoff time is selected from 0 and the second backoff variable as the first backoff time.

As one sub-embodiment of this embodiment, the first backoff time is randomly selected from 0 and the second backoff variable according to uniform distribution.

### Embodiment 12

Embodiment 12 exemplifies a structural block diagram of a processing apparatus for use in a first node according to one embodiment of the present application, as shown in FIG. 12. In FIG. 12, the processing apparatus 1200 in the first node comprises a first receiver 1201 and a first transmitter 1202.

A first transmitter 1202, sends at least one preamble according to whether PRACH repetition is performed;
a first receiver 1201, in response to the at least one preamble being sent, receives a first MAC subPDU in a first time window, wherein the first MAC subPDU indicates a first backoff parameter value; determines a first backoff time according to the product of at least the first backoff parameter value and a first backoff factor.

In Embodiment 12, at least either the first backoff parameter value or the first backoff factor depends on whether PRACH repetition is performed.

As one embodiment, the first receiver 1201 receives a first signaling set, wherein the first signaling set indicates at least a first candidate backoff factor; wherein the first backoff factor is one candidate backoff factor in a first candidate backoff factor set, and the first candidate backoff factor set comprises at least a first candidate backoff factor and a second candidate backoff factor; the first backoff factor depends on whether PRACH repetition is performed.

As one embodiment, the first backoff parameter value is one candidate backoff parameter value in a first candidate backoff parameter value set, wherein the first candidate backoff parameter value set comprises at least a first candidate backoff parameter value and a second candidate backoff parameter value; the first candidate backoff parameter value depends on whether PRACH repetition is performed.

As one embodiment, the first candidate backoff parameter value depends on a first backoff table, and the second candidate backoff parameter value depends on a second backoff table; the first backoff table comprises M1 indexes, and M2 indexes in the M1 indexes indicate M2 candidate backoff parameter values; the second backoff table comprises N1 indexes, and N2 indexes in the N1 indexes indicate N2 candidate backoff parameter values; the first backoff table differs from the second backoff table.

As one embodiment, both the first candidate backoff parameter value and the second candidate backoff parameter value depend on a first backoff table, wherein the first backoff table comprises Q1 indexes; Q2 indexes in the Q1 indexes indicate Q2 candidate backoff parameter values; Q3 indexes in the Q1 indexes indicate Q3 candidate backoff parameter values; the first candidate backoff parameter value is one candidate backoff parameter value in the Q2 candidate backoff parameter values, and the second candidate backoff parameter value is one candidate backoff parameter value in the Q3 candidate backoff parameter values; the first candidate backoff parameter value and the second candidate backoff parameter value are associated with the same index.

As one embodiment, the phrase "determines a first backoff time according to the product of at least the first backoff parameter value and a first backoff factor" comprises: setting a first backoff variable as the product of the first backoff parameter value and the first backoff factor; determining the first backoff time according to at least the first backoff variable.

As one embodiment, the phrase "determining the first backoff time according to at least the first backoff variable" comprises: determining the first backoff time according to the first backoff variable and a first parameter; the first parameter is related to the number of PRACH repetitions; PRACH repetition is performed.

As one embodiment, the first receiver 1201 comprises the antenna 452, the receiver 454, the multi-antenna receiving processor 458, the receiving processor 456, the controller/processor 459, the memory 460, and the data source 467 in FIG. 4 of the present application.

As one embodiment, the first receiver 1201 comprises the antenna 452, the receiver 454, the multi-antenna receiving processor 458, and the receiving processor 456 in FIG. 4 of the present application.

As one embodiment, the first receiver 1201 comprises the antenna 452, the receiver 454, and the receiving processor 456 in FIG. 4 of the present application.

As one embodiment, the first transmitter 1202 comprises the antenna 452, the transmitter 454, the multi-antenna transmitting processor 457, the transmitting processor 468, the controller/processor 459, the memory 460, and the data source 467 in FIG. 4 of the present application.

As one embodiment, the first transmitter 1202 comprises the antenna 452, the transmitter 454, the multi-antenna transmitting processor 457, and the transmitting processor 468 in FIG. 4 of the present application.

As one embodiment, the first transmitter 1202 comprises the antenna 452, the transmitter 454, and the transmitting processor 468 in FIG. 4 of the present application.

### Embodiment 13

Embodiment 13 exemplifies a structural block diagram of a processing apparatus for use in a second node according to one embodiment of the present application, as shown in FIG. 13. In FIG. 13, the processing apparatus 1300 in the second node comprises a second transmitter 1301 and a second receiver 1302.

A second receiver 1302, receives at least one preamble;
a second transmitter 1301, in response to the at least one preamble being received, sends a first MAC subPDU, wherein the first MAC subPDU indicates a first backoff parameter value;
in Embodiment 13, the at least one preamble is sent according to whether PRACH repetition is performed; the first MAC subPDU is received in a first time window; the product of at least the first backoff parameter value and a first backoff factor is used to determine a first backoff time; at least either the first backoff parameter value or the first backoff factor depends on whether PRACH repetition is performed.

As one embodiment, the second transmitter 1301 sends a first signaling set, wherein the first signaling set indicates at least a first candidate backoff factor; wherein the first backoff factor is one candidate backoff factor in a first candidate backoff factor set, and the first candidate backoff factor set comprises at least a first candidate backoff factor and a second candidate backoff factor; the first candidate backoff factor depends on whether PRACH repetition is performed.

As one embodiment, the first backoff parameter value is one candidate backoff parameter value in a first candidate backoff parameter value set, wherein the first candidate backoff parameter value set comprises at least a first candidate backoff parameter value and a second candidate backoff parameter value; the first candidate backoff parameter value depends on whether PRACH repetition is performed.

As one embodiment, the first candidate backoff parameter value depends on a first backoff table, and the second candidate backoff parameter value depends on a second backoff table; the first backoff table comprises M1 indexes, and M2 indexes in the M1 indexes indicate M2 candidate backoff parameter values; the second backoff table comprises N1 indexes, and N2 indexes in the N1 indexes indicate N2 candidate backoff parameter values; the first backoff table differs from the second backoff table.

As one embodiment, both the first candidate backoff parameter value and the second candidate backoff parameter value depend on a first backoff table, wherein the first backoff table comprises Q1 indexes; Q2 indexes in the Q1 indexes indicate Q2 candidate backoff parameter values; Q3 indexes in the Q1 indexes indicate Q3 candidate backoff parameter values; the first candidate backoff parameter value is one candidate backoff parameter value in the Q2 candidate backoff parameter values, and the second candidate backoff parameter value is one candidate backoff parameter value in the Q3 candidate backoff parameter values; the first candidate backoff parameter value and the second candidate backoff parameter value are associated with the same index.

As one embodiment, the phrase "the product of at least the first backoff parameter value and a first backoff factor is used to determine a first backoff time" comprises: setting a first backoff variable as the product of the first backoff parameter value and the first backoff factor; at least the first backoff variable being used to determine the first backoff time.

As one embodiment, the phrase "at least the first backoff variable being used to determine the first backoff time" comprises: the first backoff variable and a first parameter being used to determine the first backoff time; the first parameter being related to the number of PRACH repetitions; PRACH repetition being performed.

As one embodiment, the second transmitter 1301 comprises the antenna 420, the transmitter 418, the multi-antenna transmitting processor 471, the transmitting processor 416, the controller/processor 475, and the memory 476 in FIG. 4 of the present application.

As one embodiment, the second transmitter 1301 comprises the antenna 420, the transmitter 418, the multi-antenna transmitting processor 471 and the transmitting processor 416 in FIG. 4 of the present application.

As one embodiment, the second transmitter 1301 comprises the antenna 420, the transmitter 418, and the transmitting processor 416 in FIG. 4 of the present application.

As one embodiment, the second receiver 1302 comprises the antenna 420, the receiver 418, the multi-antenna receiving processor 472, the receiving processor 470, the controller/processor 475, and the memory 476 in FIG. 4 of the present application.

As one embodiment, the second receiver 1302 comprises at least one of the antenna 420, the receiver 418, the multi-antenna receiving processor 472, and the receiving processor 470 in FIG. 4 of the present application.

As one embodiment, the second receiver 1302 comprises the antenna 420, the receiver 418, and the receiving processor 470 in FIG. 4 of the present application.

Those of ordinary skill in the art may understand that all or part of the steps in the methods described above may be accomplished by instructing relevant hardware through a program that can be stored in computer-readable storage media, such as read only memory, hard disk, or optical disk. Optionally, the steps of the embodiments described above, in whole or in part, may also be implemented using one or more integrated circuits. Accordingly, the various module units in the embodiments described above may be implemented in the form of hardware or in the form of software function modules. The present application is not limited to the combination of software and hardware of any particular form. The user equipment, terminals, and UEs in the present application include but are not limited to unmanned aerial vehicles, communication modules on unmanned aerial vehicles, remote-controlled aircraft, aircraft, small aircraft, mobile phones, tablets, notebooks, in-vehicle communication equipment, wireless sensors, network cards, IoT terminals, RFID terminals, NB-IoT terminals, MTC (Machine Type Communication) terminals, eMTC (enhanced MTC) terminals, data cards, network cards, in-vehicle communication equipment, low-cost mobile phones, low-cost tablets, and other wireless communication equipment. The base stations or system equipment in the present application include, but are not limited to, Macrocell base stations, Microcell base stations, Femtocell base stations, relay base stations, gNB NR node B, TRP (Transmitter Receiver Point), and other wireless communication equipment.

The foregoing is merely a preferred embodiment of the present application and is not intended to limit the protective scope of the present application. Any modifications, equivalent substitutions, improvements, and the like made within the spirit and principles of the present application shall be included within the scope of protection of the present application.

## Claims

1. A first node for wireless communication, **characterized in that**, the node comprises:
a first transmitter, sending at least one preamble according to whether PRACH repetition is performed;
a first receiver, in response to the at least one preamble being sent, receiving a first MAC subPDU in a first time window, wherein the first MAC subPDU indicates a first backoff parameter value; determining a first backoff time according to the product of at least the first backoff parameter value and a first backoff factor;
wherein at least either the first backoff parameter value or the first backoff factor depends on whether PRACH repetition is performed.

2. The first node according to Claim 1, **characterized in that**, the node comprises:
the first receiver, receiving a first signaling set, wherein the first signaling set indicates at least a first candidate backoff factor;
wherein the first backoff factor is one candidate backoff factor in a first candidate backoff factor set, and the first candidate backoff factor set comprises at least a first candidate backoff factor and a second candidate backoff factor; the first backoff factor depends on whether PRACH repetition is performed.

3. The first node according to Claim 1 or 2, **characterized in that**, the first backoff parameter value is one candidate backoff parameter value in a first candidate backoff parameter value set, and the first candidate backoff parameter value set comprises at least a first candidate backoff parameter value and a second candidate backoff parameter value; the first backoff parameter value depends on whether PRACH repetition is performed.

4. The first node according to Claim 3, **characterized in that**, the first candidate backoff parameter value depends on a first backoff table, and the second candidate backoff parameter value depends on a second backoff table; the first backoff table comprises M1 indexes, M2 indexes in the M1 indexes indicate M2 candidate backoff parameter values; the second backoff table comprises N1 indexes, and N2 indexes in the N1 indexes indicate N2 candidate backoff parameter values; the first backoff table differs from the second backoff table.

5. The first node according to Claim 3, **characterized in that**, both the first candidate backoff parameter value and the second candidate backoff parameter value depend on a first backoff table, wherein the first backoff table comprises Q1 indexes; Q2 indexes in the Q1 indexes indicate Q2 candidate backoff parameter values; Q3 indexes in the Q1 indexes indicate Q3 candidate backoff parameter values; the first candidate backoff parameter value is one candidate backoff parameter value in the Q2 candidate backoff parameter values, and the second candidate backoff parameter value is one candidate backoff parameter value in the Q3 candidate backoff parameter values; the first candidate backoff parameter value and the second candidate backoff parameter value are associated with the same index.

6. The first node according to any one of Claims 1 to 5, **characterized in that**, the phrase "determines a first backoff time according to the product of at least the first backoff parameter value and a first backoff factor" comprises: setting a first backoff variable as the product of the first backoff parameter value and the first backoff factor; determining the first backoff time according to at least the first backoff variable.

7. The first node according to Claim 6, **characterized in that**, the phrase "determining the first backoff time according to at least the first backoff variable" comprises: determining the first backoff time according to the first backoff variable and a first parameter; the first parameter is related to the number of PRACH repetitions; PRACH repetition is performed.

8. A second node used in wireless communication, **characterized in that**, the node comprises:
a second receiver, receiving at least one preamble;
a second transmitter, in response to the at least one preamble being received, sending a first MAC subPDU, wherein the first MAC subPDU indicates a first backoff parameter value;
wherein the at least one preamble is sent according to whether PRACH repetition is performed; the first MAC subPDU is received in a first time window; the product of at least the first backoff parameter value and a first backoff factor is used to determine a first backoff time; at least either the first backoff parameter value or the first backoff factor depends on whether PRACH repetition is performed.

9. A method used in a first node for wireless communication, **characterized in that**, the method comprises:
sending at least one preamble according to whether PRACH repetition is performed;
in response to the at least one preamble being sent, receiving a first MAC subPDU in a first time window, wherein the first MAC subPDU indicates a first backoff parameter value; determining a first backoff time according to the product of at least the first backoff parameter value and a first backoff factor;
wherein at least either the first backoff parameter value or the first backoff factor depends on whether PRACH repetition is performed.

10. A method used in a second node for wireless communication, **characterized in that**, the method comprises:
receiving at least one preamble;
in response to the at least one preamble being received, sending a first MAC subPDU, wherein the first MAC subPDU indicates a first backoff parameter value;
wherein the at least one preamble is sent according to whether PRACH repetition is performed; the first MAC subPDU is received in a first time window; the product of at least the first backoff parameter value and a first backoff factor is used to determine a first backoff time; at least either the first backoff parameter value or the first backoff factor depends on whether PRACH repetition is performed.
